# EUROPÄISCHE PATENTSCHRIFT

(11) **EP 4 005 770 B1**
(45) Veröffentlichungstag und Bekanntmachung des Hinweises auf die Patenterteilung: **05.11.2025**
(21) Anmeldenummer: 22152521.5
(22) Anmeldetag: 09.09.2019
(51) Int. Cl.: B29C 51/10, B29C 51/16, B29C 51/18, B29C 51/26, B29C 51/42, B29C 51/44, B29C 55/16, B29C 63/00, B29C 63/02, B29C 63/04, B65G 47/91, B65G 1/00, B29L 31/30, B65G 61/00

(54) **VORRICHTUNG ZUM KASCHIEREN EINES FOLIENELEMENTS AUF EINEM TRÄGERTEIL**
DEVICE FOR STRATIFYING A PLASTIC FOIL ON A SUPPORT
APPAREIL DE STRATIFICATION D'UN FILM PLASTIQUE SUR UN SUPPORT

(30) Priorität: 19.09.2018 DE 102018007401; 13.11.2018 DE 102018128459; 18.01.2019 DE 102019000300
(43) Veröffentlichungstag der Anmeldung: 01.06.2022
(62) Teilanmeldung aus: 19787147.8
(73) Patentinhaber: Lisa Dräxlmaier GmbH, 84137 Vilsbiburg (DE)
(72) Erfinder: JUNG, Andreas, 83410 Laufen (DE); DANDL, Andreas, 83410 Laufen (DE); REHRL, Hubert, 83317 Teisendorf (DE)

(56) Entgegenhaltungen:
- WO-A1-2010/016530
- WO-A1-2014/108060
- WO-A1-2017/215684
- DE-A1- 102013 102 984
- DE-B4- 102013 102 984
- US-A- 5 217 656
- US-A1- 2002 043 344

## Beschreibung

Gemäß einem nicht erfindungsgemäßem Ausführungsbeispiel wird ein Greifer für einen Drapierrahmen mit einem Greiferchassis und mit wenigstens zwei sich gegenüberliegenden und zueinander beweglichen Greiferbackenelementen zum Greifen eines Folienelements gezeigt.

Ein weiteres nicht erfindungsgemäßes Ausführungsbeispiel zeigt einen Greifer für einen Drapierrahmen mit wenigstens zwei sich gegenüberliegenden und zueinander beweglichen Greiferbackenelementen zum Greifen eines Folienelements.

Ein weiteres nicht erfindungsgemäßes Ausführungsbeispiel zeigt einen Greifer für eine Vorrichtung zum Formen und/oder Kaschieren eines Folienelements, insbesondere für einen Drapierrahmen, mit wenigstens zwei sich gegenüberliegenden und zueinander beweglichen Greiferbackenelementen zum Greifen des Folienelements.

Ein weiteres nicht erfindungsgemäßes Ausführungsbeispiel zeigt einen Drapierrahmen zum Formen und/oder Kaschieren eines Folienelements.

Ein weiteres nicht erfindungsgemäßes Ausführungsbeispiel zeigt eine Vorrichtung zum Formen und/oder Kaschieren eines Folienelements mit einer Vielzahl an Greifen und mit einem Umformwerkzeug oder einem Kaschierwerkzeug, bei welcher das Umformwerkzeug oder das Kaschierwerkzeug ein Unterwerkzeug und ein Oberwerkzeug umfasst.

Ein weiteres nicht erfindungsgemäßes Ausführungsbeispiel zeigt eine Vorrichtung zum Formen und/oder Kaschieren eines Folienelements mit einem Rahmenteil, welches eine Vielzahl von Greifen umfasst, und mit einem Umformwerkzeug oder einem Kaschierwerkzeug, bei welcher das Umformwerkzeug oder das Kaschierwerkzeug (51) ein Unterwerkzeug und ein Oberwerkzeug umfasst.

Ein weiteres nicht erfindungsgemäßes Ausführungsbeispiel zeigt eine Vorrichtung zum Formen und/oder Kaschieren eines Folienelements mit einem Werkzeug, welches ein austauschbares Unterwerkzeug und ein austauschbares Oberwerkzeug umfasst, welche für einen Produktwechsel austauschbar sind.

Ein weiteres nicht erfindungsgemäßes Ausführungsbeispiel zeigt eine Vorrichtung zum Formen und/oder Kaschieren eines Folienelements auf einem zu kaschierenden Trägerteil.

Die Erfindung betrifft eine Vorrichtung zum Kaschieren eines Folienelements auf einem Trägerteil, mit Greifern zum Greifen des Folienelements, mit einer Trägerteilaufnahme zum Haltern des Trägerteils gegenüber dem Folienelement und mit einem Kaschierraum, in welchem das Folienelement auf das Trägerteil aufkaschiert wird.

Ein weiteres nicht erfindungsgemäßes Ausführungsbeispiel zeigt eine Anlage zum Fertigen eines geformten und/oder eines kaschierten Bauteils mit wenigsten einer Bearbeitungslinie und mit einer Vorrichtung zum Formen und/oder Kaschieren eines Folienelements.

Ein weiteres nicht erfindungsgemäßes Ausführungsbeispiel zeigt eine Anlage zum Fertigen eines geformten und/oder eines kaschierten Bauteils mit einer Eingangsseite, mit einer Ausgangsseite, mit wenigsten einer Bearbeitungslinie zwischen der Eingangsseite und der Ausgangseite, und mit einer Vorrichtung zum Formen und/oder Kaschieren eines Folienelements.

Ein weiteres nicht erfindungsgemäßes Ausführungsbeispiel zeigt ein Verfahren zum Formen und/oder Kaschieren eines Folienelements, bei welchem das Folienelement in geöffnete Greifer eingelegt und anschließend von den Greifern gegriffen wird, und bei welchem ferner das Folienelement mit einem Formteil oder mit einem zu kaschierenden Trägerteil in Wirkkontakt gebracht wird.

Ein weiteres nicht erfindungsgemäßes Ausführungsbeispiel zeigt ein Verfahren zum Umrüsten einer Vorrichtung zum Formen und/oder Kaschieren eines Folienelements, bei welchem für ein Umrüsten der Vorrichtung auf ein anderes Produkt das Werkzeug ausgewechselt wird, wobei das Oberwerkezug und/oder das Unterwerkzeug ausgewechselt werden.

Ein weiteres nicht erfindungsgemäßes Ausführungsbeispiel zeigt ein Verfahren zum Formen und/oder Kaschieren eines Folienelements auf einem Trägerteil, bei welchem das Folienelement und das Trägerteil zum Formen und/oder Kaschieren zueinander positioniert werden.

Ein weiteres nicht erfindungsgemäßes Ausführungsbeispiel zeigt ein Verfahren zum Fertigen eines kaschierten Bauteils aus einem Folienelement und einem Trägerteil, bei welchem das Folienelement an einer Kaschiervorrichtung auf das Trägerteil aufkaschiert wird, und bei welchem anschließend das kaschierte Bauteil aus der Kaschiervorrichtung entnommen und für eine Weiterverarbeitung bereitgestellt wird.

Aus dem Stand der Technik sind insbesondere Vorrichtungen zum Formen und/oder Kaschieren einer Folie auf ein Formteil oder ein zu kaschierendes Trägerteil bekannt. Derartige Vorrichtungen umfassen meistens einen Spannrahmen, mittels welchem die Folie gegenüber dem Formteil oder dem zu kaschierenden Trägerteil in einer Folienebene aufgespannt wird, wobei beispielsweise das Formteil oder das zu kaschierende Trägerteil anschließend durch die Folienebene hindurch bewegt wird, um die Folie zu formen oder zu kaschieren.

Beispielsweise ist aus der europäischen Patentanmeldung EP 2 397 308 A2 eine Vorrichtung zum Recken und Formen eines Folienzuschnitts mit einem solchen Spannrahmen bekannt, bei welcher dieser Folienzuschnitt zwischen einem Oberspannrahmen und einem Unterspannrahmen eines Spannrahmens geklemmt ist, und so gegenüber einem Formwerkzeug gehalten wird. Der Spannrahmen kann hierbei translatorisch in x-, y- und z-Richtung, also entlang von drei Raumachsen, verstellt werden und zusätzlich um einen Fixpunkt, also um genau eine Raumachse, gedreht werden, um hinsichtlich eines Formungsprozesses ein Nachgleiten des Folienzuschnitts zu gewährleisten.

Aus der DE 699 09 835 D2 ist des Weiteren eine Maschine zum Strecken und Vakuumformen einer rechteckigen Tafel aus Plastikmaterial bekannt, wobei die Maschine einen Spannrahmen aus vier Klemmleisten umfasst, mittels welchem jeweils eine Kante der rechteckigen Kunststofftafel festgeklemmt werden kann. Hierbei liegen sich jeweils zwei Klemmleisten paarweise gegenüber, wobei jede Klemmleiste mehrere zweite Klemmvorrichtungen umfasst. Diese zweiten Klemmvorrichtungen sind auf jeder Klemmleiste angebracht und können sich entlang der Klemmleistenlänge mit einem niedrigen Reibkoeffizienten entlang der jeweiligen Klemmleiste bewegen, wobei sie von der Materialtafel hinterhergezogen werden. Insofern bewegen sich die zweiten Klemmvorrichtungen proportional zur Bewegung der Klemmleisten, um Randverwerfungen entgegenzuwirken.

WO 2017/215684 A1 zeigt eine Vorrichtung zum Recken und/oder Formen und/oder kaschierend Auflegen eines Folienelements mit einem Trägerrahmen zum Aufspannen des Folienelements relativ zu einem Formwerkzeug oder einem zu kaschierenden Bauteil, und mit Greifern zum Greifen des Folienelements, welche gegenüber dem Trägerrahmen beweglich gelagert sind, vor, wobei sich die Vorrichtung dadurch auszeichnet, dass Greifer gegenüber dem Trägerrahmen mehraxial verstellbar angeordnet sind, um das Folienelement präziser an eine Kontur des Formwerkzeugs oder des zu kaschierenden Bauteils anzupassen.

DE 10 2013 102984 B4 zeigt eine Folienprägeeinrichtung mit einer Heißprägevorrichtung, die einen beheizten Prägestempel aufweist. Unter Ausbildung eines Anpressdrucks wird eine auf einer Trägerfolie angeordnete Übertragungslage einer Heißprägefolie auf eine Oberfläche eines Werkstücks übertragen. Die Heißprägevorrichtung weist steuerungstechnische Ein- und Ausgänge auf. Die Folienprägereinrichtung weist einen Industrieroboter mit steuerungstechnischen Ein- und Ausgängen auf. Die steuerungstechnischen Ein- und Ausgänge der Heißprägevorrichtung und des Industrieroboters sind mit einer Steuerungseinheit verbunden. Der Industrieroboter ist so ausgebildet, dass er das Werkstück der Heißprägevorrichtung zuführt, das Werkstück auf dem Prägestempel positioniert, das Werkstück an dem Prägestempel vorbeiführt, und das geprägte Werkstück von der Heißprägevorrichtung abführt.

Bei solchen Spannrahmen wirken oftmals erhebliche Zugkräfte auf die Folie, wodurch es unter Umständen zu ungünstigen, unerwünschten Foliendehnungen kommen kann, insbesondere in kurvigen, gebogenen oder hinterschnittenen Bereichen des Formteils bzw. des Trägerteils.

Derartige Foliendehnungen können insbesondere bei Folien mit hochwertigen, genarbten oder ähnlichen wertigen Oberflächen zu erheblichen optischen Qualitätseinbußen führen.

Um diesbezügliche Nachteile zu vermeiden oder zumindest abzumildern, existieren bereits Spannrahmen mit einzelnen Greifern, welche die Folie an ihren Rändern greifen und dann über das Formteil bzw. des zu kaschierenden Trägerteils ziehen. Mit solchen Greifern kann die Gefahr einer unerwünscht großen Foliendehnung entgegengewirkt werden.

Der Erfindung liegt die Aufgabe zugrunde, gattungsgemäße Vorrichtungen, Bauteile oder Bauteilgruppen hiervon, bzw. Anlagen mit einer derartigen Vorrichtung sowie entsprechende Verfahren weiterzuentwickeln. Insbesondere ist es Aufgabe der Erfindung, trotz Einsparung an Folienmaterial höherwertige oder qualitativ zumindest gleichwertige geformte und/oder kaschierte Bauteile herzustellen.

Gemäß einem nicht erfindungsgemäßem Ausführungsbeispiel wird ein Greifer für eine Vorrichtung zum Formen und/oder Kaschieren eines Folienelements, insbesondere für einen Drapierrahmen, mit einem Greiferchassis und mit wenigstens zwei sich gegenüberliegenden und zueinander beweglichen Greiferbackenelementen zum Greifen eines Folienelements gezeigt, wobei die Greiferbackenelemente an einem Greiferkopfteil des Greifers angeordnet sind, und wobei das Greiferkopfteil des Greifers gegenüber dem Greiferchassis zumindest mit einem Freiheitsgrad beweglich gelagert ist.

Durch das zusätzlich gegenüber dem Greiferchassis bewegliche Greiferkopfteil kann das Folienelement mittels der Greifer noch differenzierter gegenüber einem Formteil oder einem zu kaschierenden Trägerteil positioniert werden, wodurch die Gefahr von zu großen Foliendehnungen signifikant reduziert werden.

Mit anderen Worten bedeutet dies, dass das Greiferkopfteil unabhängig von einer Bewegung des Greiferchassis entsprechend im Raum, insbesondere in einem Drapierraum bzw. Kaschierraum, bewegt werden kann.

Dies ist besonders im Hinblick auf immer neu designte und immer komplexer geformte Bauteile vorteilhaft.

Speziell im Automotive-Bereich werden kaschierte Bauteile mit immer komplexer designten bzw. gestalteten Oberflächen kreiert, wie beispielsweise Türinnenverkleidungen; Armlehnen, Sitzrückwände oder sonstige Kfz-Innenverkleidungsteile.

Durch die hier vorgeschlagene Erfindung können insbesondere diesbezügliche kaschierte Bauteile materialsparend, aber dennoch qualitativ hochwertig, und kostengünstig hergestellt werden.

An dieser Stelle sei bereits erwähnt, dass die Begrifflichkeiten "kaschieren", "aufkaschieren", "ankaschieren" oder dergleichen vorliegend synonym verwendet werden.

Insbesondere kann der Greifer zum Greifen des Folienelements bis in einen "Umbugabschnitt" des Folienelements hineinfahren und Folienelement dort greifen, wodurch eine nochmalige Verkleinerung des erforderlichen Zuschnitts des Folienelements erzielt werden kann.

Der Begriff "Greifer" beschreibt im Sinne der Erfindung eine Einrichtung, mittels welcher das Folienelement, insbesondere Ränder des Folienelements, gegriffen und betriebssicher gehalten werden können.

Zum sicheren Greifen besitzt der Greifer wenigstens zwei sich gegenüberliegende und zueinander bewegliche Greiferbackenelemente.

Die Greiferbackenelemente gestalten hierbei insofern zwei zueinander verlagerbare Greifflächenteile aus, mittels welchen auch unterschiedliche Greifkräfte bzw. Haltekräfte auf das zu greifende Folienelement ausgeübt werden können.

Beispielsweise können die Greifer kumulativ oder alternativ auch eine Saugeinrichtung umfassen, um das Folienelement im Sinne vorliegender Erfindung zu greifen.

Der vorliegende Greifer kann sich aber besonders durch ein Greiferchassis auszeichnen, an welchem die Greiferbackenelemente bis auf ihrer Greifbewegungsmöglichkeiten nicht unmittelbar starr angeordnet sind, sondern an welchem ein die Greiferbackenelemente tragendes Greiferkopfteil gelenkig angeordnet ist, welches zwischen dem Greiferchassis und dem Greiferchassis zwischengeschaltet ist.

Und zwar kann das Greiferkopfteil an dem Greiferchassis derart gelenkig angeordnet werden, dass das Greiferkopfteil gegenüber dem Greiferchassis mindestens einen Freiheitsgrad besitzt, während das Greiferchassis an sich selbst mit mehreren, bevorzugt mit sechs oder mehr, Freiheitsgraden an einem Rahmenteil oder dergleichen gelagert ist.

Beispielsweise können Greiferbackenelemente auch eine Rollbewegung um die Längsachse der Greiferbackenelemente ausführen, um das Folienelement bereichsweise noch differenzierter gegenüber dem Trägerteil drapieren bzw. positionieren zu können, bevor der eigentliche Kaschierprozess mittels eines Differenzdrucks startet. Hierbei kann die Rollbewegung unabhängig von einer Bewegung des Greiferchassis erfolgen.

Hierbei kann das Greiferchassis alle erforderlichen Verstellmechanismen zum Verstellen, insbesondere zum räumlichen Verstellen, des Greifers umfassen, inklusive Translation-, Rotations-, Schwenkachsen oder dergleichen, oder einen Antriebsmotor oder mehrere solcher Antriebsmotoren zum Treiben des Greifers.

Insbesondere sind die eigentlichen, zueinander beweglichen Greiferbackenelemente nicht direkt an dem Greiferchassis befestigt, sondern nur mittelbar unter Einbeziehung bzw. Zwischenschaltung des Greiferkopfteils.

Das bedeutet, dass die zueinander beweglichen Greiferbackenelemente an dem Greiferkopfteil gelagert sein können; und das Greiferkopfteil beweglich an dem Greiferchassis.

Der Begriff "Folienelement" beschreibt im Sinne der Erfindung bevorzugt eine vorkonfektionierte Folie, also ein entsprechend auf das Formteil oder das zu kaschierende Trägerteil zugeschnittener Folienzuschnitt.

Das Folienelement kann etwa auch als eigensteifes Plattenelement oder dergleichen vorliegen.

Das Folienelement kann des Weiteren durch unterschiedlichste Materialien realisiert sein, so kann es insbesondere auch durch luftdurchlässige Materialen definiert sein, welche insbesondere auch bei einem Presskaschieren eingesetzt werden.

Bei geeigneter Ausführung vorliegende Erfindung ist es ebenfalls denkbar, Folien in Gestalt einer Bandware von einer Rolle oder dergleichen zu verwenden.

Der Bezeichnung "Trägerteil" beschreibt vorliegend einen Grundkörper, welcher vorzugsweise dreidimensional ausgebildet ist. Somit handelt es sich bei dem Trägerteil um ein bevorzugt dreidimensional gestaltetes Gebilde, um dementsprechend auch dreidimensionale Bauteile bzw. kaschierte Bauteile herzustellen.

An dieser Stelle sei des Weiteren noch darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

Ferner sei hier noch erwähnt, dass im Rahmen der vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

Darüber hinaus sei hier bereits unterstrichen, dass die vorliegende Erfindung mit all ihren Ausgestaltungen bzw. diesbezüglichen konstruktiven und verfahrenstechnischen Gegenständen nicht nur die Variationen des Vakuumkaschieren, sondern darüber hinaus auch die Variationen des Presskaschierens, oder dergleichen betreffen.

Die hier genannten Freiheitsgrade sind bevorzugt mittels motorischer Antriebseinrichtungen realisiert, sie können jedoch je nach Erfordernis auch manuell einstellbar ausgeführt sein. Je nach Kundenwunsch bzw. einer erforderlichen Komplexität können einzelne Freiheitsgerade manuell einstellbar sein, während andere kumulativ oder alternativ motorisch, insbesondere automatisiert, einstellbar sind.

Eine bevorzugte Ausführungsvariante sieht vor, dass das Greiferkopfteil des Greifers hinsichtlich wenigstens einer Raumachse beweglich ist, welche von Raumachsen des Greiferchassis verschieden ist, hinsichtlich das Greiferchassis beweglich ist. Hierdurch können die durch die Greifer erzielbaren Freiheitsgrade nochmals gesteigert werden.

In diesem Zusammenhang sei beispielsweise daran gedacht, dass das Greiferkopfteil auch mehraxial verstellbar an dem Greiferchassis des Greifers angeordnet sein kann.

Mit dem Begriff "mehraxial" ist im Sinne der Erfindung eine multifunktionale bzw. multiaxiale räumliche Bewegungsfreiheit des Greifers bzw. insbesondere der Greiferbackenelemente beschrieben, welche sich durch mehrere translatorische und/oder rotatorische Freiheitsgrade entlang mehrerer Raumachsen formuliert ist. Hierbei können eine translatorische Bewegung und eine rotatorische Bewegung eine gemeinsame Raumachse oder unterschiedliche Raumachsen besitzen.

Bevorzugt kann das Greiferkopfteil gegenüber dem Greiferchassis dreidimensional verstellt werden.

Hierdurch können die Greif- und Verstellmöglichkeiten des Greifers in Bezug auf das Folienelement und insbesondere gegenüber dem Formteil oder dem zu kaschierenden Trägerteil erheblich erhöht werden.

Insbesondere kann mittels des hier vorgeschlagenen Greifers das Folienelement differenzierter bzw. effektiver gegriffen werden, wodurch kritische Foliendehnungen sehr gut vermieden werden können.

Darüber hinaus kann das Folienelement aufgrund der differenzierteren Handhabung auch hinsichtlich seiner Folienfläche extrem knapp zugeschnitten werden. Hierdurch reduziert sich das um das Folienelement herum befindliche und ansonsten verlorengehende Folienrestmaterial signifikant, wodurch insgesamt eine erhebliche Menge an Folienrestmaterial eingespart werden kann.

Es versteht sich, dass die Gelenkigkeit zwischen dem Greiferchassis und dem Greiferkopfteil konstruktiv unterschiedlich bewerkstelligt werden kann. Eine konstruktiv einfache, aber äußerst effektive Realisierung eines zusätzlichen Freiheitsgrads kann bereitgestellt werden, wenn das Greiferkopfteil des Greifers mittels eines Drehantriebs um eine Drehachse drehbar ist.

Ein Drehantrieb kann sehr einfach und kompakt etwa durch einen Schrittmotor oder einen Servomotor realisiert werden. Eine entsprechende Drehbewegung kann äußerst präzise erfolgen, wenn der Drehantrieb ein Schneckengetriebe aufweist.

Eine besonders gewinnbringende zusätzliche Beweglichkeit kann an dem Greifer erzielt werden, wenn die Drehachse senkrecht zu einer Stirnfläche des Greiferchassis angeordnet ist, also um eine Horizontalachse. Hierdurch kann ein Bereich eines Folienelements besonders exakt gegenüber einem Trägerteil abgewickelt werden.

Es hat sich gezeigt, dass es vorteilhaft ist, wenn das Greiferkopfteil des Greifers gegenüber dem Greiferchassis um eine Vertikalachse und/oder um eine Horizontalachse drehbar ist. Hierdurch kann ein Folienelement noch differenzierter an eine Kontur eines Trägerteils angelegt werden, insbesondere spannungsfrei.

Eine Horizontalachse kann hierbei einfach durch eine quer zu einer Stirnfläche verlaufenden Drehachse verwirklicht werden.

Gemäß einem nicht erfindungsgemäßem Ausführungsbeispiel wird ein Greifer für eine Vorrichtung zum Formen und/oder Kaschieren eines Folienelements, insbesondere für einen Drapierrahmen, mit wenigstens zwei sich gegenüberliegenden und zueinander beweglichen Greiferbackenelementen zum Greifen eines Folienelements gezeigt, wobei wenigstens eines der Greiferbackenelemente Temperiermittel aufweist, mittels welchen das wenigstens eine Greiferbackenelement zumindest teilweise temperierbar ist.

Diese Temperiermittel sind bevorzugt als aktive Temperiermittel realisiert, so dass gewünschte Zieltemperaturen aktiv angesteuert und an den Greiferbackenelementen eingestellt werden können.

Derartige Temperiermittel können unterschiedlichst ausgeführt sein. Insbesondere können die Temperiermittel als Heizeinrichtungen oder Kühleinrichtungen ausgeführt sein.

Nur zum Beispiel sei hier erwähnt, dass die Temperiermittel beispielsweise als Heizdrähte, Heizstäbe oder ähnlichem elektrisch betrieben werden können.

Geeignete Temperiermittel können aber auch Fluidkanäle oder dergleichen für ein Heizfluid oder Kühlfluid umfassen, wobei die Fluidkanäle auch durch die einzelnen Greiferbackenelemente hindurchgeführt sein können.

Vorteilhafterweise sind die Greiferbackenelemente hierbei zumindest teilweise gekühlt, so dass selbst vollflächig mit Kleber versehene Folienelemente mit den Greiferbackenelementen gegriffen werden können, so dass hierdurch die Gefahr verringert ist, dass die Greifer, insbesondere die Greiferbackenelemente, unmittelbar mit Kleberresten verschmutzen. Hierdurch brauchen derart gekühlte Greifer auch nur seltener gereinigt zu werden, und dennoch ist ein betriebssicherer Einsatz der Greifer gewährleistet.

Ferner kann der Kunde selbst entscheiden, ob er eine Kleberauftragsstation zum partiellen Kleberauftrag auf das Folienelement einsetzen möchte, oder ob er die vorliegenden Greifer mit gekühlten Greiferbackenelementen einsetzen möchte, um eine solche Kleberauftragsstation ggf. einsparen zu können, etwa aus Kosten- und/oder Platzgründen.

Vorteilhaft ist es, wenn wenigstens eines der Greiferbackenelemente Anschlussschnittstellen für Temperiermittel aufweist, so dass die Greiferbackenelemente an eine Kühl- und/oder Heizeinrichtungen angeschlossen werden können.

Beispielsweise umfasst eine Anschlussschnittstelle eine Kühlschlauchkupplung, mittels welcher Kühlfluidschläuche an in die Greiferbackenelemente eingebrachte Fluidkanäle angeschlossen werden können.

Gedacht sei im Zusammenhang mit einer Anschlussschnittstelle für Temperiermittel alternativ auch an elektrische Steckverbinder, um in oder an Greiferbackenelemente befindliche elektrische Bauteile mit Strom versorgen zu können.

Die Anhaftungsgefahr insbesondere von Kleber an temperierte Greiferbackenelemente der Greifer kann zusätzlich signifikant reduziert werden, wenn wenigstens eines der Greiferbackenelemente eine aktiv temperierbare Antihaftkontaktoberfläche aufweist.

Hierfür geeignete Antihaftkontaktoberflächen können unterschiedlich ausgeführt sein. Bevorzugt ist eine derartige Antihaftkontaktoberfläche als Teflonbeschichtung oder dergleichen ausgestaltet.

Aber auch andere konstruktive Möglichkeiten können vorliegend in Betracht gezogen werden. Gedacht sei daran, dass etwa ein Greiferbackenelement aus einem entsprechenden Material hergestellt ist, welches anti-adhäsive Wirkungen besitzt, etwa Keramiken oder dergleichen.

Der Begriff "Antihaftkontaktoberfläche" beschreibt im Sinne der Erfindung im Wesentlichen diejenigen Bereiche, welche mit dem zu greifenden Folienelement in Wirkkontakt kommen können.

Insbesondere Greifflächenteile von Greiferbackenelementen können mit Temperiermitteln bzw. Antihaftkontaktoberflächen ausgestattet sein.

Gemäß einem nicht erfindungsgemäßem Ausführungsbeispiel wird ein Greifer für eine Vorrichtung zum Formen und/oder Kaschieren eines Folienelements, insbesondere für einen Drapierrahmen, mit wenigstens zwei sich gegenüberliegenden und zueinander beweglichen Greiferbackenelementen zum Greifen des Folienelements gezeigt, wobei der Greifer Umbugmittel zum Umbugen eines Folienrandes um eine Kante eines mit dem Folienelement kaschierten Trägerteils.

Durch derartige in den Greifer integrierte Umbugmittel kann ein Herstellungsprozess für ein kaschiertes Bauteil weiter gestrafft und optimiert werden.

Sind die Umbugmittel an den mit wenigstens zwei sich gegenüberliegenden und zueinander beweglichen Greiferbackenelementen angeordnet, können die Greifer zum Kaschieren und Umbugen sehr kompakt gebaut werden.

Ähnliches gilt, wenn die Umbugmittel an einem Greiferchassis und/oder an einem Greiferkopfteil angeordnet sind.

Die vorliegenden Greifer können unterschiedlichst an einer Vorrichtung zum Formen und/oder Kaschieren eines Folienelements angeordnet sein. Beispielsweise können Greifer an einem beliebig gebauten Gestell angeordnet sein. Oder an säulenartigen, vorzugsweise individuell höhenverstellbaren Grundplattformen, auf welchen jeweils ein Greifer montiert ist. Konstruktiv besonders einfach jedoch können Greifer in gattungsgemäße Vorrichtungen integriert werden, wenn sie von einem Rahmenteil getragen werden, wie etwa der vorliegend beschriebene Drapierrahmen.

Gemäß einem nicht erfindungsgemäßem Ausführungsbeispiel wird ein Drapierrahmen zum Formen und/oder Kaschieren eines Folienelements mit einem Drapierraum und mit einer Vielzahl an motorisch angetriebenen Greifern zum Greifen des Folienelements gezeigt, wobei Greifer des Drapierrahmens wenigstens teilweise mindestens sieben Freiheitsgrade aufweisen.

Der Begriff "Drapierrahmen" beschreibt im Sinne der Erfindung ein Rahmenteil zum Anordnen einer Vielzahl an Greifern derart an bzw. in einem Drapierraum, dass ein Folienelement mittels der Greifer oder zumindest mittels eines Teils der Greifer erstens mit einem Formteil bzw. mit einem zu kaschierenden Trägerteil in Wirkkontakt gebracht und zweitens anschließend an diesem Formteil bzw. an diesem zu kaschierenden Trägerteil lediglich abgewickelt werden können, wodurch unnötige Dehnungen, insbesondere Läng- und/oder Querdehnungen, des Folienelements vermeidbar sind.

Das heißt mit anderen Worten, dass das Folienelement mit dem erfindungsgemäßen Drapierrahmen zumindest partiell nicht mehr oder nur noch vernachlässigbar gereckt wird, wie es bei herkömmlichen bekannten Spannrahmen der Fall ist.

Der vorliegende Drapierrahmen kann sich insofern von herkömmlichen Spannrahmen bzw. Kaschierrahmen dadurch unterscheiden, dass das Folienelement hier eben nicht mehr - wie bisher üblich - bereits vor einem Beaufschlagen mit einem Differenzdruck, insbesondere mit einem Vakuum, gereckt bzw. verstreckt und damit kritisch gedehnt wird.

Der Drapierrahmen kann hierbei als offenes Rahmenteil, beispielsweise als eine Art Gitterrohrrahmen, oder geschlossen mit einem umbauten Gehäuse ausgeführt sein.

Hierbei kann der Drapierraum ein von dem Drapierrahmen zumindest teilweise umbauter Arbeitsraum sein. Der Drapierraum ist bevorzugt auch ein Kaschierraum, in welchem ein Folienelement auf ein Trägerteil aufkaschiert werden kann.

Durch das Bereitstellen von mindestens sieben Freiheitgraden der Greifer, insbesondere deren Greiferbackenelemente, gelingt es konstruktiv außerordentlich einfach, das Folienelement mit dem vorliegenden Drapierrahmen, derart zu behandeln, dass das Folienelement spannungsfrei oder nur mit einer geringen, eher vernachlässigbaren Spannung auf das Formteil bzw. das zu kaschierende Trägerteil aufgelegt wird.

Diese sieben Freiheitsgrade stehen hierbei insbesondere an den Greiferbackenelementen zur Verfügung. Genauer gesagt können sich die Greiferbackenelemente mit sieben Freiheitsgraden gegenüber dem Drapierrahmen und insbesondere in dem Drapierraum bewegen.

In diesem Zusammenhang beschreibt der Begriff "Drapieren" im Sinne der Erfindung das flächige Halten eines Folienelements in einem Drapierraum eines Drapierrahmens und insbesondere in einer Drapierebene vor einem Formteil oder einem zu kaschierenden Trägerteil und das zumindest partielle Aufbringen des Folienelements insbesondere auch auf gekrümmte Oberflächen des Formteils bzw. des zu kaschierenden Trägerteils.

Es ist besonders vorteilhaft, wenn der Greifer ein Greiferchassis aufweist, welches gegenüber dem Drapierrahmen mit wenigstens zwei oder drei, vorzugsweise sechs, Freiheitsgraden mehraxial verstellbar angeordnet ist, und der Greifer ein Greiferkopfteil umfasst, welches wenigstens einen weiteren Freiheitsgrad aufweist, welche von den Freiheitsgraden des Greiferchassis verschieden ist. Hierdurch kann konstruktiv sehr kompakt erreicht werden, dass für die Greiferbackenelemente mindestens sieben Freiheitgrade zur Verfügung stehen, wobei die Gesamtzahl der Freiheitsgrade durch die Kombination von Einzelfreiheitsgraden des Greiferchassis und des Greiferkopfteils zustande kommt.

Gemäß einem nicht erfindungsgemäßem Ausführungsbeispiel wird ein Drapierrahmen zum Formen und/oder Kaschieren eines Folienelements mit einem Drapierraum und mit einer Vielzahl an motorisch angetriebenen Greifern zum Greifen des Folienelements gezeigt, wobei die Greifer Temperiermittel aufweisen, mittels welchen die Greiferbackenelemente zumindest teilweise temperierbar sind.

Wie vorstehend bereits angedeutet, können Greiferbackenelemente des Drapierrahmens insbesondere gekühlt werden, wodurch selbst vollflächig mit Kleber versehene Folienelemente mit dem Drapierrahmen vor einem Formteil oder einem zu kaschierenden Trägerteil drapiert werden können, ohne dass die Greifer, insbesondere die Greiferbackenelemente, unmittelbar mit Kleberresten kritisch verschmutzen. Hierdurch brauchen derart gekühlte Greifer auch nur seltener gereinigt werden, wodurch der Drapierrahmen noch betriebssicherer eingesetzt werden kann.

Ferner kann der Kunde entscheiden, ob in Kombination mit dem Drapierrahmen eine Kleberauftragsstation zum partiellen Kleberauftrag auf das Folienelement zum Einsatz kommen soll, oder ob anstatt dessen der Drapierrahmen mit Greifern mit gekühlten Greiferbackenelementen ausgerüstet sein soll.

Darüber hinaus ist es sehr zweckmäßig, wenn der Drapierrahmen einen zumindest teilweise beheizbaren Drapierraum aufweist, so dass ein bereits in dem Drapierraum drapiertes Folienelement noch beheizt werden kann, selbst wenn es von den Greifern gegriffen ist. Hierdurch kann die ideale Behandlungstemperatur an dem Folienelement bis kurz vor dessen Formung bzw. Kaschierung gehalten werden, wodurch ein verbessertes Form- bzw. Kaschierergebnis erreicht werden kann.

Insofern ist es ebenso zweckmäßig, wenn der Kaschierraum beheizbar ausgestaltet ist.

Gemäß einem nicht erfindungsgemäßem Ausführungsbeispiel wird ein Drapierrahmen zum Formen und/oder Kaschieren eines Folienelements mit einem Drapierraum und mit einer Vielzahl an motorisch angetriebenen Greifern zum Greifen des Folienelements gezeigt, wobei der Drapierrahmen Umbugmittel zum Umbugen eines Folienrandes um eine Kante eines mit dem Folienelement kaschierten Trägerteils.

Ist ein Drapierrahmen sogleich mit derartigen Umbugmittel ausgerüstet, kann hierdurch ein Herstellungsprozess für ein kaschiertes Bauteil ebenfalls weiter gestrafft und optimiert werden.

Ein bevorzugtes Ausführungsbeispiel für den vorliegenden Drapierrahmen sieht vor, dass die Umbugmittel an wenigstens einem der Greifer, an einem Greiferchassis des wenigstens einen Greifers und/oder an einem Greiferkopfteil des wenigstens einen Greifers und/oder an wenigstens einem Greiferbackenelement des wenigstens einen Greifers angeordnet sind. Hierdurch lassen sich die Umbugmittel extrem einfach in den Drapierrahmen integrieren.

Gleiches gilt im Übrigen, wenn die Umbugmittel an dem Drapierrahmen oder einem Rahmenteil hiervon angeordnet sind, wodurch die Kombination Kaschier-/Umbugeinrichtung konstruktiv ebenfalls sehr kompakt bereitgestellt werden kann.

Es versteht sich, dass die Umbugmittel unterschiedlichst ausgestaltet sein können, insbesondere wenn sie an unterschiedlichen Stellen des vorliegenden Drapierrahmens angeordnet sind.

Baulich sehr einfach kann die Erfindung umgesetzt werden, wenn die Umbugmittel wenigstens ein Umbugschieberelement zum Umbugen des Folienelements oder dergleichen umfassen.

Jedenfalls kann der vorliegende Drapierrahmen durch die hier beschriebenen Greifer vorteilhaft weiterentwickelt werden.

Gemäß einem nicht erfindungsgemäßem Ausführungsbeispiel wird eine Vorrichtung zum Formen und/oder Kaschieren eines Folienelements mit einer Vielzahl an Greifen und mit einem Umformwerkzeug oder einem Kaschierwerkzeug, bei welcher das Umformwerkzeug oder das Kaschierwerkzeug ein Unterwerkzeug und ein Oberwerkzeug umfasst, gelöst, wobei die Vorrichtung einen Greifer oder einen Drapierrahmen nach einem der hier beschriebenen Merkmale umfasst.

Gemäß einem nicht erfindungsgemäßem Ausführungsbeispiel wird eine Vorrichtung zum Formen und/oder Kaschieren eines Folienelements mit einem Rahmenteil, welches eine Vielzahl an Greifen umfasst, und mit einem Umformwerkzeug oder einem Kaschierwerkzeug umfassend ein Unterwerkzeug und ein Oberwerkzeug gezeigt, wobei das Rahmenteil einen Greifer oder einen Drapierrahmen nach einem der hier beschriebenen Merkmale umfasst.

Ist die Vorrichtung zum Formen eines Folienelements an einem Formteil und/oder zum Kaschieren eines Folienelements auf ein Trägerteil mit dem vorliegenden Greifer bzw. Drapierrahmen ausgerüstet, kann diese Vorrichtung wesentlich präziser arbeiten.

Allein durch die vorliegenden Greifer bzw. den vorliegenden Drapierrahmen sind gattungsgemäße Vorrichtungen vorteilhaft weiterentwickelt, da mittels der Vorrichtung nun ein Folienelement nahezu spannungsfrei an bzw. auf dem Formteil bzw. Trägerteil abgewickelt werden, wodurch eine Dehnung des Folienelements zumindest partiell zur Gänze vermieden werden kann.

Vorteilhafterweise weist die Vorrichtung eine Zuführ- und/oder Einlegeeinrichtung zum Zuführen und/oder Einlegen eines Folienelements zu Greifern bzw. in Greifer insbesondere eines Drapierrahmens der Vorrichtung aufweist. Hierdurch kann sehr einfach ein automatisierter Transport des Folienelements in den Kaschierraum oder in den Drapierrahmen realisiert werden, wodurch die Effektivität der Vorrichtung erhöht werden kann.

Insbesondere kann das Folienelement hierbei translatorisch, aber beispielsweise auch rotatorisch um eine Hochachse herum bewegt werden, um es hierdurch in geeigneter Weise und vorteilhaft in den Drapierrahmen platzieren und in geöffnete Greifer des Drapierrahmens einlegen zu können.

Die vorliegende Vorrichtung kann zusätzlich durch einen zu einer Zuführ- und/oder Einlegestrecke zum Zuführen und/oder Einlegen eines Folienelements quer verlagerbaren Drapierrahmen vorteilhaft weiterentwickelt werden, mittels welchem das zugeführte bzw. eingelegte Folienelement etwa einem Unterwerkzeug zuführbar ist. Hierdurch kann der Drapierrahmen konstruktiv einfach zwischen einer Umform- bzw. Kaschierposition und einer Einlegeposition verlagert werden.

Eine bevorzugte Ausführungsvariante sieht vor, dass die Vorrichtung eine Heizeinheit zum Beheizen des Folienelements außerhalb eines Drapierraums insbesondere eines Drapierrahmens der Vorrichtung aufweist, welche gemeinsam mit einem Folienelement entlang einer Zuführ- und/oder Einlegestrecke zum Zuführen bzw. Einlegen des Folienelements zu Greifern bzw. in Greifer, oder zu einem bzw. in einen Drapierraum insbesondere eines Drapierrahmens der Vorrichtung bewegbar ist. Durch eine solche Heizeinheit gelingt es, ein sich in Bewegung befindliches Folienelement während seiner Zuführbewegung zu beheizen, so dass das Folienelement nicht mehr an einer Heizeinheit unbewegt verweilen muss, bis etwa eine Zieltemperatur an dem Folienelement erreicht ist. Insofern kann hierdurch die Vorrichtung noch zeiteffektiver betrieben werden.

Die Vorrichtung kann eine Heizeinheit zum Beheizen des Folienelements aufweisen, welche zumindest teilweise temporär innerhalb eines Drapierraums insbesondere eines Drapierrahmens der Vorrichtung anordenbar ist. Dementsprechend kann das Folienelement bis in den Drapierrahmen bzw. Drapierraum hinein beheizt werden, bevorzugt kontinuierlich seit der Zuführung an der Zuführ- und/oder Einlegestrecke.

Es versteht sich, dass die Merkmale hinsichtlich der vorliegend beschriebenen Heizeinheit eine gattungsmäße Vorrichtung auch ohne die übrigen Merkmale der Erfindung vorteilhaft weiterentwickelt.

Weist die Vorrichtung des Weiteren eine Beschickungsstation zum Beschicken der Vorrichtung mit Folienelementen aufweist, kann der Automatisierungsgrad der vorliegenden Vorrichtung noch weiter erhöht werden. Hierdurch kann insbesondere Bedienpersonal an der Vorrichtung eingespart bzw. noch effektiver eingesetzt werden.

Eine weitere Effizienzsteigerung kann durch die Erhöhung des Automatisierungsgrads konstruktiv relativ einfach erreicht werden, wenn die Vorrichtung eine Einbringeinrichtung zum Einbringen eines zu kaschierenden Trägerteils in die Vorrichtung, insbesondere in einen Drapierraum eines Drapierrahmens der Vorrichtung, aufweist.

Eine solche Einbringeinrichtung kann auf unterschiedliche Weise an der Vorrichtung realisiert werden, etwa in Gestalt von Linearfördereinrichtungen oder dergleichen. Beispielsweise wird das Einbringen des Trägerteils mittels einer Bandfördereinrichtung oder dergleichen bewerkstelligt.

Weist die Vorrichtung eine Entnahmeeinrichtung zum Entnehmen eines Formteils oder eines kaschierten Bauteils aus der Vorrichtung, insbesondere aus einem Drapierraum eines Drapierrahmens oder eines Kaschierraums der Vorrichtung, auf, kann die Vorrichtung nicht nur eingangsseitig vorteilhaft weiterentwickelt werden, sondern auch ausgangsseitig, indem fertig kaschierte Bauteile ebenfalls automatisiert aus der Vorrichtung entnommen werden können.

Auch eine solche Entnahmeeinrichtung kann auf unterschiedliche Weise an der Vorrichtung realisiert sein. Auch hier sei an entsprechende Linearfördereinrichtungen, wie etwa Bandfördereinrichtungen oder dergleichen, gedacht.

Ein diesbezüglich baulicher Aufwand der Vorrichtung kann erheblich reduziert werden, wenn die Einbringeinrichtung und die Entnahmeeinrichtung eine gemeinsame Transferstation umfassen. Hierdurch kann an der Vorrichtung die erforderliche Anzahl an Bauteilen signifikant reduziert werden. Insofern kann hierdurch auch der erforderliche Raumbedarf für das Aufstellen der Vorrichtung erheblich reduziert werden.

Es versteht sich, dass hierfür unterschiedlich bauende Transfereinrichtungen eingesetzt werden können. Beispielsweise kann eine geeignete Transfereinrichtung als Etagenförderanlage mit unterschiedlichen Einbring- und Entnahmeebenen ausgestaltet sein.

Ein konstruktiv bevorzugte Ausführungsvariante sieht jedoch vor, dass die gemeinsame Transferstation eine gemeinsame Robotereinrichtung mit einem bevorzugt mehraxialen beweglichen Manipulator umfasst. Eine solche Robotereinrichtung kann aufgrund ihrer kompakten Bauweise, ihrer flexiblen Bewegungsabläufe usw. sehr kompakt an der vorliegenden Vorrichtung ausgeführt werden.

Unabhängig hiervon können insofern sowohl die Einbringeinrichtung als auch die Entnahmeeinrichtung durch eine solche Robotereinrichtung realisiert werden, gegebenenfalls auch getrennt voneinander.

Gemäß einem nicht erfindungsgemäßem Ausführungsbeispiel wird eine Vorrichtung zum Formen und/oder Kaschieren eines Folienelements mit einem Werkzeug, welches ein austauschbares Unterwerkzeug und ein austauschbares Oberwerkzeug umfasst, welche für ein Produktwechsel austauschbar sind, gezeigt, wobei sich die Vorrichtung dadurch auszeichnet, dass das Werkzeug einen mit einer Vielzahl an Greifern ausgerüsteten Drapierrahmen umfasst, welcher für den Produktwechsel gemeinsam mit dem Unterwerkzeug und/oder dem Oberwerkzeug austauschbar ist.

Hierbei kann der Drapierrahmen ein Teil des temporär an der Vorrichtung eingesetzten Werkzeugs sein und kann insofern gemeinsam mit dem Unter- und/oder Oberwerkzeug ausgewechselt werden, wenn dies bei einem Produktwechsel erforderlich sein sollte. Somit kann die vorliegende Vorrichtung wesentlich schneller auf ein neues Produkt umgerüstet werden, als dies bei bisherigen Lösungen möglich ist, bei denen ein Rahmenteil eines vergleichbaren Spannrahmens noch Bestandteil der eigentlichen Vorrichtung ist.

Weist das Unterwerkzeug eine erste Formhälfte oder ein Kaschierschalenteil, Kaschierschieberelemente oder dergleichen und das Oberwerkzeug eine zweite Formhälfte oder eine Trägerteilaufnahme auf, kann insbesondere das zu kaschierende Trägerteil mit der Trägerteilaufnahme von oben in den Drapierraum und/oder den Drapierrahmen eingebracht werden, so dass beispielsweise die vorstehend beschriebene Robotereinrichtung sehr gut zum Einsatz kommen kann.

Weist das Unterwerkzeug eine erste Formhälfte oder eine Trägerteilaufnahme und das Oberwerkzeug eine zweite Formhälfte oder ein Kaschierschalenteil, Kaschierschieberelemente oder dergleichen auf, kann insbesondere das zu kaschierende Trägerteil alternativ beispielsweise von unten, bzw. von seitlich in den Drapierraum und/oder den Drapierrahmen eingebacht werden.

Um insbesondere die einzelnen Greifer, Einrichtungen oder dergleichen an der Vorrichtung ansteuern bzw. regeln zu können, ist es vorteilhaft, wenn die Vorrichtung eine Regel- und/oder Steuereinrichtung aufweist, mittels welcher insbesondere die Greifer zum Greifen des Folienelements einzeln ansteuerbar sind.

Insbesondere ist es vorteilhaft, wenn eine Zugkräftemesseinrichtung zum Messen von zwischen dem Folienelement und Greifer wirkenden Zugkräften vorhanden ist. Hierdurch lassen sich die Greifer sehr exakt steuern. Eine derartige Zugkräftemesseinrichtung kann auch Bestandteil der Regel- und/oder Steuereinrichtung sein.

Gemäß einem nicht erfindungsgemäßem Ausführungsbeispiel wird eine Vorrichtung zum Formen und/oder Kaschieren eines Folienelements mit einem Rahmenteil, welches eine Vielzahl von Greifen umfasst, und mit einem Umformwerkzeug oder einem Kaschierwerkzeug umfassend ein Unterwerkzeug und ein Oberwerkzeug gezeigt, wobei die Vorrichtung Zugkräftemessmittel aufweist, mittels welchen zwischen dem Folienelement und den Greifern wirkende Zugkräfte messbar und überwachbar sind.

Mittels solcher Zugkräftemessmittel wird die Gefahr von kritischen Foliendehnungen besonders effektiv verringert. Insbesondere ist hierbei eine Kontrolle von unerwünschten Spannungen bzw. Foliendehnungen an einem von den Greifern gegriffenen Folienelement möglich.

Es versteht sich, dass derartige Zugkräftemessmittel unterschiedlichst gemessen werden können. Beispielsweise können Zugkräfte mittels Dehnmessstreifen einfach gemessen werden, um nur ein Beispiel zu nennen. Solche Dehnmessstreifen können etwa an dem Greiferkopfteil angeordnet sein.

Gemäß einem nicht erfindungsgemäßem Ausführungsbeispiel wird eine Vorrichtung zum Formen und/oder Kaschieren eines Folienelements an einem zu kaschierenden Trägerteil gezeigt, wobei die Vorrichtung eine Einrichtung zum Umbugen des an dem Trägerteil ankaschierten Folienelements aufweist.

Ist die Vorrichtung mit einer Einrichtung zum Umbugen ausgerüstet, kann ein Herstellungsprozess für ein kaschiertes Bauteil ebenfalls weiter gestrafft und optimiert werden.

Ferner ist es in diesem Zusammenhang vorteilhaft, wenn Umbugmittel der Einrichtung zum Umbugen an einem Greifer zum Greifen des Folienelements, insbesondere an dessen Greiferchassis, Greiferkopfteil und/oder Greiferbackenelemente, und/oder an einem Drapierrahmen zum Formen und/oder Kaschieren eines Folienelements, und/oder an einem sonstigen Gestell- oder Rahmenteil der Kaschierstation, angeordnet sind. Hierdurch ergeben sich vielfältige Konstruktionsmöglichkeiten.

Vorteilhaft ist es ferner, wenn Umbugmittel der Einrichtung zum Umbugen wenigstens ein Umbugschieberelement zum Umbugen des Folienelements oder dergleichen umfassen, wodurch die Umbugmittel konstruktiv einfach bereitgestellt werden können.

Baulich sehr einfach kann die Erfindung umgesetzt werden, wenn die Umbugmittel wenigstens ein Umbugschieberelement zum Umbugen des Folienelements oder dergleichen umfassen.

Die vorliegende Aufgabe wird nach einem ersten Aspekt der Erfindung auch noch von einer Vorrichtung zum Kaschieren eines Folienelements auf einem Trägerteil, mit Greifern zum Greifen des Folienelements, mit einer Trägerteilaufnahme zum Haltern des Trägerteils gegenüber dem Folienelement und mit einem Kaschierraum, in welchem das Folienelement auf das Trägerteil aufkaschiert wird, gelöst, wobei die Vorrichtung eine Einbringeinrichtung zum Einbringen der Trägerteilaufnahme und/oder des Trägerteils in den Kaschierraum aufweist, und wobei die Einbringeinrichtung wenigstens zwei Freiheitsgrade im Raum, insbesondere in dem Kaschierraum, aufweist, wobei die Vorrichtung ein Presswerkzeug mit einer ersten Werkzeughälfte und mit einer zweiten Werkzeughälfte aufweist, und wobei die erste Werkzeughälfte die Einbringeinrichtung umfasst.

Durch die Einbringeinrichtung mit wenigstens zwei Freiheitsgraden können das Folienelement und das Trägerteil, welche miteinander verbunden werden müssen, signifikant besser und differenzierter zueinander positioniert werden, insbesondere bereichsweise sowie insbesondere innerhalb eines Kaschierraums bzw. eines Drapierraums.

Es ist hierbei vorteilhaft, wenn die Einbringeinrichtung einen mehraxial beweglichen Manipulator aufweist, insbesondere einen innerhalb eines Kaschierraums bzw. eines Drapierraums mehraxial beweglichen Manipulator.

Der Begriff "Manipulator" beschreibt im Sinne der Erfindung eine Einrichtung, mittels welcher eine physikalische Interaktion eines Roboters bzw. einer Robotereinrichtung mit seiner Umgebung erfolgt und mittels welcher automatisiert mechanische Arbeit verrichtet werden kann. Insbesondere umfasst ein solcher Manipulator ein mehrgelenkiges Roboterarmteil, mittels welchem mehraxiale Bewegungen im Raum möglich sind.

Die Vorrichtung kann noch effektiver gebaut werden, wenn die Einbringeinrichtung eine Austragseinrichtung zum Austragen des kaschierten Bauteils ist. Wie vorstehend bereits beschrieben, gelingt es hierdurch konstruktiv und verfahrenstechnisch einfach sowohl ein Handling eines zu kaschierenden Trägerteils als auch eines kaschierten Trägerteils bzw. Bauteils.

Damit die Vorrichtung auch problemlos zum Presskaschieren eingesetzt werden kann, zeichnet sich die Vorrichtung durch ein Presswerkzeug mit einer ersten Werkzeughälfte und mit einer zweiten Werkzeughälfte aus, wobei die erste Werkzeughälfte die Einbringeinrichtung, insbesondere den mehraxial beweglichen Manipulator, umfasst.

Vorzugsweise ist die erste Werkzeughälfte hierbei als Oberwerkzeug ausgeführt, so dass ein Trägerteil mittels der Einbringeinrichtung von oben in einen Drapierraum bzw. Kaschierraum eingebracht werden kann.

Die zweite Werkzeughälfte ist dementsprechend als Unterwerkzeug ausgebildet, welches dann ein Formschalenteil oder dergleichen umfasst.

Bevorzugt umfasst die Vorrichtung eine Hubeinrichtung für die zweite Werkzeughälfte, mittels welcher das Formschalenteil oder dergleichen gegen die Trägerteilaufnahme der Einbringeinrichtung gepresst werden kann.

Damit diesbezügliche auch höhere Presskräfte unbeschadet von der mehraxialen Einbringeinrichtung ausgehalten werden können, ist es vorteilhaft, wenn die Einbringeinrichtung eine zusätzliche Stützeinrichtung zum Aufnehmen von Presskräften umfasst.

Durch eine derartige Stützeinrichtung kann insbesondere der Manipulator entlastet werden, so dass dieser "normal" dimensioniert werden kann, aber dennoch selbst hohe Presskräfte aushalten kann, ohne Schaden zu nehmen.

Hierzu ist es vorteilhaft, wenn der Manipulator eine Schnittstelle zu einer Presskräfteableiteinrichtung, wie etwa einen Hydraulikzylinderstempel oder dergleichen, aufweist.

Gemäß einem nicht erfindungsgemäßem Ausführungsbeispiel wird eine Vorrichtung zum Formen und/oder Kaschieren eines Folienelements auf einem Trägerteil, mit Greifen zum Greifen des Folienelements, mit einer Trägerteilaufnahme zum Haltern des Trägerteils gegenüber dem Folienelement und mit einem Kaschierraum, in welchem das Folienelement auf das Trägerteil aufkaschiert wird, gezeigt, wobei die Vorrichtung eine Stanzeinrichtung zum Stanzen des Folienelements aufweist. Dadurch, dass die Stanzeinrichtung direkt in der Vorrichtung zum Kaschieren integriert ist, kann das fertige kaschierte Bauteil unmittelbar noch in der Kaschiervorrichtung von überschüssigem Folienrestmaterial befreit werden, wodurch der Herstellungsprozess von kaschierten Bauteilen noch erheblich weiter gestrafft werden kann.

Insbesondere kann an einer entsprechend ausgerüsteten Anlage zum Herstellen von kaschierten Bauteilen auf eine zusätzliche Stanzstation oder dergleichen verzichtet werden.

Die Begrifflichkeit "Stanzeinrichtung" beschreibt im Sinne der Erfindung jegliche Einrichtung, mittels welcher Folienrestmaterial von dem kaschierten Folienelement getrennt und entfernt werden kann. Insofern spielt es keine Rolle, ob das Folienelement gestanzt, geschnitten und/oder gerissen, oder dergleichen wird.

Eine diesbezüglich vorteilhafte Ausführungsvariante sieht vor, dass die Stanzeinrichtung ein segmentiertes Stanzmesser mit einer Vielzahl an Stanzmessersegmenten aufweist. Mittels solcher Stanzmessersegmente kann ein Trennvorgang an einem Folienelement sukzessiv erfolgen, wodurch auch eine Reduzierung von in der Kaschiervorrichtung wirkenden Stanzkräften vorteilhaft erzielt werden kann. Dies ist besonders dann vorteilhaft, wenn das kaschierte Bauteil von einem Manipulator gehalten wird, da hierdurch weniger Arbeitskräfte bzw. Stanzkräfte auf den Manipulator einwirken. Somit kann dieser weniger massiv ausgebildet sein.

Außerdem können mit einem segmentierten Stanzmesser unterschiedliche Bauteilgeometrien einfacher nachgebildet werden, so dass ein segmentiertes Stanzmesser für unterschiedliche kaschierte Bauteile verwendet werden kann, wodurch die Herstellungskosten insgesamt weiter reduziert werden können.

Besonders kompakt kann die Vorrichtung gebaut werden, wenn die Stanzeinrichtung innerhalb des Kaschierraums, insbesondere innerhalb eines Drapierraums und insbesondere innerhalb eines Drapierrahmens, anordenbar ist.

Die Vorrichtung kann noch kompakter realisiert werden, wenn die Stanzeinrichtung innerhalb einer Dichteinrichtung einer Druckdifferenzeinrichtung der Vorrichtung angeordnet ist.

Ist die Stanzeinrichtung innerhalb eines Vakuumraums einer Druckdifferenzeinrichtung der Vorrichtung angeordnet ist, so kann Folienrestmaterial unmittelbar nach einem Kaschierprozess noch in der Kaschiervorrichtung entfernt werden.

Ist die Stanzeinrichtung gegenüber einer Trägerteilaufnahme zum Aufnehmen eines zu kaschierenden Trägerteils angeordnet, kann die Stanzeinrichtung bzw. deren einzelne Stanzmessersegmente beispielsweise direkt neben einem Formschalenteil oder dergleichen platziert werden.

Gemäß einem nicht erfindungsgemäßem Ausführungsbeispiel wird eine Vorrichtung zum Formen und/oder Kaschieren eines Folienelements auf einem Trägerteil, mit Greifen zum Greifen des Folienelements, mit einer Trägerteilaufnahme zum Haltern des Trägerteils gegenüber dem Folienelement, mit einem Kaschierraum, in welchem das Folienelement auf das Trägerteil aufkaschiert wird, und mit einer Druckdifferenzeinrichtung zum Erzeugen eines Vakuums gezeigt, wobei die Druckdifferenzeinrichtung eine segmentierte Dichteinrichtung zum Abdichten von Vakuumbereichen mit einer Vielzahl an Dichtschiebersegmenten. Durch die segmentierte Dichteinrichtung kann ein Vakuumraum an der Kaschiervorrichtung noch enger gefasst werden. Dies hat wiederum den positiven Effekt einer zusätzlichen Materialeinsparung, da eine Dichteinrichtung bis in den Bereich eines Umbugfolienbereichs des Folienelements hinein anordenbar ist. Insofern können noch kleiner Umbugbereiche bzw. Umbuglappen an dem kaschierten Bauteil geschaffen werden.

Vorteilhafterweise sind die Dichtschiebersegmente in einer Reihe hintereinander angeordnet, so dass das Folienelement segmentweise abgedichtet werden kann. Insbesondere kann hierdurch sukzessiv eine umlaufende Dichteinrichtung erzeugt werden.

Sind die Dichtschiebersegmente um eine Stanzeinrichtung herum angeordnet, kann die Vorrichtung nochmals kompakter realisiert werden.

Eine segmentweise Abdichtung eines Vakuumraums kann insbesondere dadurch verbessert werden, wenn die Dichtschiebersegmente einzeln ansteuerbar und bewegbar sind.

Gemäß einem nicht erfindungsgemäßem Ausführungsbeispiel wird eine Vorrichtung zum Formen und/oder Kaschieren eines Folienelements auf einem Trägerteil, mit Greifen zum Greifen des Folienelements, mit einer Trägerteilaufnahme zum Haltern des Trägerteils gegenüber dem Folienelement, und mit einem Kaschierraum, in welchem das Folienelement auf das Trägerteil aufkaschiert wird, gezeigt, wobei die Vorrichtung eine Korrektureinrichtung zum Korrigieren von partiellen Lageabweichungen einzelner Folienelementbereiche aufweist. Durch die Korrektureinrichtung können Lageabweichungen korrigiert werden, welche sich gegebenenfalls nach dem Positionieren bzw. Abwickeln bzw. Anlegen des Folienelements bezüglich des Trägerteils ergeben haben. Hierdurch können kaschierte Bauteile noch präziser und qualitativ hochwertiger herstellen. Insbesondere kann hierdurch ein ansonsten entstehender Ausschuss an Schlechtteilen signifikant reduziert werden.

Derartige Lageabweichungen können sich insbesondere partiell an dem Folienelement ergeben.

Eine vorteilhafte Ausführungsvariante sieht insofern vor, dass die Korrektureinrichtung Erkennungsmittel zum Erkennen von partiellen Lageabweichungen aufweist. Derartige Erkennungsmittel können baulich sehr einfach beispielsweise durch optische Sensoren realisiert werden. In einer sehr einfachen Ausführungsvariante kann die Korrektureinrichtung durch eine Kamera ausgerüstet sein, welche das Folienelement als Ist-Lage optisch aufnimmt und mit einer Soll-Lage des Folienelements gegenüber dem Trägerteil vergleicht.

Kumulativ oder alternativ ist es vorteilhaft, wenn die Korrektureinrichtung Detektiermittel zum Detektieren von speziell ausgebildeten Folienelementbereiche aufweist. Insbesondere Lageabweichungen von speziell ausgebildeten Folienelementbereichen sind optisch extrem störend und daher unakzeptabel. Solche speziell ausgebildeten Folienelementbereiche können zum Beispiel hinsichtlich einer Blindnaht, eines 3D-Nahtkleids, zweifarbiger Folienmaterialien oder dergleichen vorliegen und sofort ersichtlich sein, so dass eine diesbezügliche Lageabweichung bisher oftmals direkt zu einem Ausschussteil führt.

Beispielsweise erkennt wird eine Fehllage einer Blindnaht durch optische Detektiermittel erkannt, wobei eine Steuereinheit beispielsweise Greifer, welche das Folienelement greifen und halten, derart ansteuert und bewegt, dass die Blindnaht aus ihrer Fehllage heraus und in die korrekte Lage hinein verschoben wird. Anschließend kann dann der eigentliche Kaschiervorgang erfolgen. Erforderlichenfalls kann auch ein Manipulator, welcher eine Trägerteilaufnahme besitzt, an welcher wiederum das Trägerteil gehaltert ist, durch die vorliegende Korrektureinrichtung manipuliert werden.

Jedenfalls ist es vorteilhaft, wenn die Korrektureinrichtung eine Steuereinheit zum Steuern von Greifern und/oder der Trägerteilaufnahme aufweist, so dass die Position des Folienelements gegenüber dem Trägerteil noch vor dem Aufkaschieren zumindest bereichsweise verändert werden kann.

Gemäß einem nicht erfindungsgemäßem Ausführungsbeispiel wird eine Anlage zum Fertigen eines geformten und/oder eines kaschierten Bauteils mit einer Eingangsseite, mit einer Ausgangsseite, mit wenigstens einer Bearbeitungslinie zwischen der Eingangsseite und der Ausgangseite, und mit einer Vorrichtung zum Formen und/oder Kaschieren eines Folienelements gezeigt, wobei die Anlage eine Vorrichtung nach einem der hier beschriebenen Merkmale aufweist.

Ist die Anlage mit einer Vorrichtung im Sinne der Erfindung ausgerüstet, können insbesondere kaschierte Bauteile effektiver und kostengünstiger hergestellt werden.

Die vorliegende Aufgabe wird insbesondere von einer Anlage zum Fertigen eines geformten und/oder eines kaschierten Bauteils mit wenigsten einer Bearbeitungslinie und mit einer Vorrichtung zum Formen und/oder Kaschieren eines Folienelements gelöst, wobei die Anlage eine Zuführ- und/oder Einlegeeinrichtung zum Zuführen und/oder Einlegen eines Folienelements zu Greifern bzw. in Greifer eines Drapierrahmens der Vorrichtung, und/oder eine Einbringeinrichtung zum Einbringen eines zu kaschierenden Trägerteils an ein Unterwerkzeug der Vorrichtung, und/oder eine Entnahme- und/oder Bereitstellungseinrichtung zum Entnehmen bzw. Bereitstellen eines Formteils oder eines kaschierten Bauteils aus der Vorrichtung aufweist. Auch durch eine solche Anlage kann eine sehr kompakte Herstellung insbesondere von kaschierten Bauteilen gewährleistet werden.

Geeignete Zuführ- und/oder Einlegeeinrichtungen, Einbringeinrichtungen, Entnahmeeinrichtungen wurden vorstehend bereit erläutert.

Eine Bereitstellungseinrichtung ist im Sinne der Erfindung dazu eingerichtet, ein kaschiertes Bauteil an eine nachfolgende Bearbeitungsstation der Anlage zu übergeben, in welcher das kaschierte Bauteil dann weiterbearbeitet werden kann.

Mit der Anlage können vorteilhaft nahezu beliebige geformte und/oder kaschierte Bauteile hergestellt werden, wie etwa Automotive-Bauteile insbesondere Instrumentenpanels, Türinnenpanels oder dergleichen.

Die Anlage kann baulich besonders einfach aufgebaut werden, wenn die Einbringeinrichtung und Entnahme- und/oder Bereitstellungseinrichtung eine gemeinsame Robotereinrichtung mit einem bevorzugt mehraxialen beweglichen Manipulator umfasst. Insbesondere kann bei entsprechender Auslegung der Anlage mittels einer Entnahmeeinrichtung sogleich eine Einbringeinrichtung für Trägerteile und eine Bereitstellungseinrichtung für kaschierte Bauteile verkörpert werden, insbesondere wenn die Entnahmeeinrichtung dazu eingerichtet ist, ein Trägerteil an der designierten B-Seite des kaschierten Bauteils zu greifen und zu halten.

Eine vorteilhafte Ausführungsvariante sieht vor, dass die Anlage eine Beschickungsstation zum Beschicken der Vorrichtung mit Folienelementen aufweist, wobei die Beschickungsstation inline in der Bearbeitungslinie der Vorrichtung vorgeschaltet ist. Durch eine solche Beschickungsstation kann der Automatisierungsgrad an der Anlage weiter erhöht werden, wodurch insbesondere kaschierte Bauteile effektiver hergestellt werden können.

Eine weitere vorteilhafte Ausführungsvariante sieht vor, dass die Anlage eine Kleberauftragsstation zum Auftragen von Kleber auf das Folienelement aufweist, wobei die Kleberauftragsstation inline in der Bearbeitungslinie der Vorrichtung vorgeschaltet ist. Hierdurch kann die Herstellung insbesondere von kaschierten Bauteilen räumlich und zeitlich weiter komprimiert werden.

Ist die Kleberauftragsstation inline in der Bearbeitungslinie einer Beschickungsstation nachgeschaltet und/oder einer Zuführ- und/oder Einlegeeinrichtung der Vorrichtung vorgeschaltet, besteht die Möglichkeit, die Folienelemente zuerst einmal an der Bearbeitungslinie der Anlage geordnet zu platzieren, um im Anschluss daran die Folienelemente mithilfe der Kleberauftragsstation präzise mit Kleber zu beschichten. Vorteilhafterweise kann hierdurch die Verweildauer von mit Kleber präparierten Folienelementen reduziert werden, bevor diese in dem Drapierrahmen der Vorrichtung weiter zu bearbeiten.

Die Bearbeitung des Folienelements kann noch weiter gestrafft werden, wenn die Anlage eine Heizeinheit zum Beheizen des Folienelements aufweist, wobei insbesondere die Heizeinheit in einer Zuführ- und/oder Einlegeeinrichtung zum Zuführen und/oder Einlegen eines Folienelements zu Greifern bzw. in Greifer eines Drapierrahmens der Vorrichtung integriert ist.

Eine weitere Steigerung des Automatisierungsgrades kann an der Anlage erzielt werden, wenn die Anlage eine Transferstation zum Transferieren eines Formteils oder eines kaschierten Bauteils aufweist, wobei die Transferstation inline in der Bearbeitungslinie der Vorrichtung nachgeschaltet und inline einer weiteren Bearbeitungsstation vorgeschaltet ist.

Darüber hinaus ist es vorteilhaft, wenn die Anlage eine Austragsstation zum Austragen eines Formteils oder eines kaschierten Bauteils umfasst, wobei die Austragsstation inline der Bearbeitungslinie einer Beschneidestation und/oder einer Stanz- und/oder einer Umbugstation nachgeschaltet ist, wodurch die fertig hergestellten Bauteile automatisiert von den vorgeschalteten Bearbeitungsstationen weggeführt werden können.

Gemäß einem nicht erfindungsgemäßem Ausführungsbeispiel wird einer Anlage zum Fertigen eines geformten und/oder eines kaschierten Bauteils mit einer Eingangsseite, mit einer Ausgangsseite, mit wenigstens einer Bearbeitungslinie zwischen der Eingangsseite und der Ausgangseite, und mit einer Vorrichtung zum Formen und/oder Kaschieren eines Folienelements gezeigt, wobei die Vorrichtung eine Einrichtung zum Umbugen des an dem Trägerteil ankaschierten Folienelements aufweist.

Kombiniert die Vorrichtung eine Kaschier- und Umbugfunktion, kann an der Anlage auf eine separate Umbugstation mit einer Umbugvorrichtung verzichtet werden, wodurch die Anlage kompakter gebaut werden kann.

Gemäß einem nicht erfindungsgemäßem Ausführungsbeispiel wird ein Verfahren zum Formen und/oder Kaschieren eines Folienelements gezeigt, bei welchem das Folienelement in geöffnete Greifer eingelegt und anschließend von den Greifern gegriffen wird, und bei welchem ferner das Folienelement mit einem Formteil oder mit einem zu kaschierenden Trägerteil in Wirkkontakt gebracht wird, wobei das Folienelement mittels Greifer zumindest teilweise lediglich an der Kontur des Formteils oder des Trägerteils abgewickelt und/oder angelegt wird.

Mittels des vorgeschlagenen Verfahrens kann das Folienelement nahezu oder bevorzugt zur Gänze zugkräftefrei bzw. spannungsfrei mit dem Formteil bzw. Trägerteil in Wirckontakt bzw. in Erstkontakt gebracht werden.

Dies ist besonders vorteilhaft in Bezug auf dreidimensional ausgestaltete Trägerteile.

Das heißt mit anderen Worten, dass das Folienelement mittels Interaktion der Greifer und gegebenenfalls mittels Interaktion einer Trägerteilaufnahme zugkräftefrei bzw. spannungsfrei und damit dehnungsfrei an das Trägerteil angelegt bzw. abgewickelt wird, und erst daran anschließend das Folienelement mittels Aufbringens von Druckkräften dauerhaft mit dem Trägerteil verbunden wird, wie nachfolgend noch beschrieben ist.

Hierdurch ist eine besonders material- und oberflächenschonende Behandlung des Folienelements gegeben.

Ein zugkräftefreies bzw. spannungsfreies bzw. dehnungsfreies Abwickeln bzw. Anbringen des Folienelements mit dem Trägerteil kann insbesondere in Abhängigkeit von Wegparametern, Kraftparametern, Geschwindigkeitsparametern und/oder Temperaturparametern gesteuert werden.

Wird das Folienelement mittels Greifer unter Umgehung einer Reckung bzw. Verstreckung des Folienelements mit dem Form- und/oder Trägerteil in Wirkkontakt gebracht, kann das Folienelement anschließend insbesondere mittels eines Drapierrahmens, genauer gesagt mittels Greifer, ohne kritische Zugkräfte an der Oberfläche des zu kaschierenden Trägerteils zumindest partiell abgewickelt werden, insbesondere bevor das Folienelement unter Zuhilfenahme eines Differenzdrucks auf das Trägerteils aufkaschiert wird.

Eine besonders vorteilhafte Verfahrensvariante sieht vor, dass das Folienelement zumindest teilweise dehnungsfrei und/oder zumindest dehnungsreduziert mit einer partiellen Foliendehnung von weniger als 10 %, vorzugsweise von weniger als 5 %, auf das Formteil oder Trägerteil aufgelegt wird, insbesondere bevor das Folienelement unter Zuhilfenahme eines Differenzdrucks auf das Trägerteil aufkaschiert wird. Hierdurch kann eine kritische Foliendehnung insbesondere vor einem letztendlichen An- bzw. Aufkaschieren des Folienelements an das Trägerteil vermieden werden.

Die Begrifflichkeiten "abwickeln", "in Wirkkontakt bringen", "auflegen", "anlegen" beschreiben im Sinne der Erfindung jeweils das Annähern und in Verbindung bringen des Folienelements mit dem Formteil bzw. Trägerbauteil, bevor insbesondere das Folienelement mittels eines weiteren Prozessschrittes, etwa mittels Vakuumkaschierens oder Presskaschierens, aufkaschiert wird. Also zumindest vorerst unter Umgehung von Kräften durch das Vakuum- bzw. Presskaschieren.

Wird das Folienelement zumindest teilweise mit einer partiellen Foliendehnung von weniger als 5 % auf das Formteil oder das Trägerteil aufgelegt, kann eine besonders hohe Qualität der Optik erzielt werden, falls dies bei besonders hochwertigen Produkten erforderlich ist.

Wird in keinem Wirkkontaktbereich zwischen dem Folienelement und dem Formteil oder dem zu kaschierenden Trägerteil eine maximale Foliendehnung von mehr als 15 % überschritten wird, insbesondere in Längs- und Querrichtung des Folienelements, kann das Folienelement besonders schonend an der entsprechenden Vorrichtung bearbeitet und darüber hinaus eine gewünschte Optik an dem Folienelement beibehalten werden.

Um das Folienelement konstruktiv und auch verfahrenstechnisch wie vorstehend beschrieben verarbeiten zu können, ist es vorteilhaft, wenn Greifer und insbesondere Greiferbackenelemente hiervon an und/oder in einem Drapierraum insbesondere eines Drapierrahmen mit bis zu sieben Freiheitsgrade oder mehr bewegt werden, um das Folienelement zumindest teilweise an der Kontur des Formteils oder des Trägerteils abzuwickeln und/oder anzuformen.

Das Folienelement kann bereits beim Einlegen in den Drapierraum bzw. insbesondere in den Drapierrahmen besonders schonend behandelt werden, wenn das Folienelement spannungsfrei in die geöffneten Greifer eingelegt wird.

Das Folienelement kann betriebssicher an die Greifer übergeben und eingelegt werden, wenn Greifer vor dem Einlegen des Folienelements in eine Einlegeposition verfahren werden, in welcher das Folienelement auf ein unteres Greiferbackenelement des jeweiligen Greifers aufgelegt wird.

Werden die Greifer nach dem Einlegen des Folienelements sequenziell geschlossen, kann die Gefahr von unerwünschten Verwerfungen bzw. Spannungen an dem Folienelement verringert werden.

Gemäß einem nicht erfindungsgemäßem Ausführungsbeispiel wird ein Verfahren zum Formen und/oder Kaschieren eines Folienelements gezeigt, bei welchem das Folienelement von Greifern gegriffen wird, um es mit einem Formteil oder einem zu kaschierenden Trägerteil in Wirkkontakt zu bringen, wobei mittels Zugkräftemessmittel zwischen dem Folienelement und den Greifern wirkende Zugkräfte gemessen und überwacht werden, wenn das Folienelement mit dem zu kaschierenden in Wirkkontakt gebracht wird.

Durch ein Messen der zwischen dem Folienelement und den Greifern wirkenden Zugkräfte wird die Gefahr von kritischen Foliendehnungen kumulativ oder alternativ auch besonders effektiv verringert werden. Insbesondere ist hierbei eine Kontrolle von unerwünschten Spannungen bzw. Foliendehnungen an einem von den Greifern gegriffenen Folienelement möglich. Dies ist speziell bei einem dreidimensionalen Trägerteil vorteilhaft.

Eine besonders vorteilhafte Verfahrensvariante sieht vor, dass mittels Zugkräftemessmittel zwischen dem Folienelement und den Greifern wirkende Zugmesskräfte gemessen und überwacht werden, wenn das Folienelement mittels Greifer zumindest teilweise lediglich an der Kontur des Formteils oder des Trägerteils abgewickelt und/oder angelegt wird.

Auch dies ist speziell bei einem dreidimensionalen Trägerteil vorteilhaft. Hierdurch gelingt eine besonders gute Vorbereitung insbesondere eines weiteren Kaschierprozesses, noch bevor das Folienelement beispielsweise durch ein Vakuum auf das Trägerteil aufkaschiert wird.

Beispielsweise können die Greifer in Abhängigkeit von den ermittelten Zugkräften und durch die vorstehend beschriebene Regel- und/oder Steuereinrichtung angesprochen werden.

Gemäß einem nicht erfindungsgemäßem Ausführungsbeispiel wird ein Verfahren zum Formen und/oder Kaschieren eines Folienelements gezeigt, bei welchem das Folienelement von Greifern gegriffen wird, um es mit einem Formteil oder einem zu kaschierenden Trägerteil in Wirkkontakt zu bringen, wobei das durch die Greifer gegriffene Folienelement vor und/oder während des Anformens des durch die Greifer gegriffenen Folienelements an das Formteil oder das zu kaschierende Trägerteil beheizt wird.

Hierdurch kann das Folienelement selbst noch in einem Drapierraum bzw. Kaschierraum, insbesondere in einem Drapierrahmen, beheizt werden, sogar noch dann, wenn es bereits von den Greifern gegriffen ist.

Insofern können das Folienelement und insbesondere hierauf aufgetragener Kleber optimal für das anschließende Aufkaschieren vorbereitet werden. Insbesondere kann das Folienelement innerhalb des Drapierraums bzw. Drapierrahmens von Spannungen befreit werden.

Beispielsweise werden hierzu geeignete Heizeinrichtungen einer Heizeinheit oberhalb und/oder unterhalb der innerhalb eines Drapierraums bzw. Kaschierraums angeordneten Greifer positioniert.

Insofern sieht eine zweckmäßige Verfahrensvariante vor, dass zum Beheizen des durch die Greifer gegriffenen Folienelements eine Heizeinrichtung oberhalb der Greifer und/oder eine Heizeinrichtung unterhalb der Greifer temporär angeordnet wird.

Insbesondere kann eine derartige Heizeinrichtung auch von außerhalb in einen Drapierraum bzw. Kaschierraum, insbesondere in einen Drapierrahmen, hinein verlagert werden, wenn das Folienelement bereits von den Greifern gegriffen ist.

Gemäß einem nicht erfindungsgemäßem Ausführungsbeispiel wird ein Verfahren zum Formen und/oder Kaschieren eines Folienelements gezeigt, bei welchem das Folienelement von Greifern gegriffen wird, um es mit einem Formteil oder einem zu kaschierenden Trägerteil in Wirkkontakt zu bringen, wobei sich das Verfahren dadurch auszeichnet, dass das Folienelement den Greifern mittels einer Zuführ- und/oder Einlegebewegung zugeführt wird und das Folienelement während der Zuführ- und/oder Einlegebewegung beheizt wird.

Mit anderen Worten bedeutet dies, dass das Folienelement beheizt wird, während es in Richtung eines Drapierraums bzw. Kaschierraums, insbesondere eines Drapierrahmens, bewegt wird.

Hierdurch gelingt es, das Folienelement bereits während einer Zustellbewegung zu beheizen, wobei entsprechende Heizeinrichtungen einer Heizeinheit bevorzugt mit Folienelementgeschwindigkeit entlang der Zuführ- und/oder Einlegestrecke bewegt werden.

Besonders vorteilhaft ist hierbei, dass die Zuführ- und/oder Einlegestrecke nicht über die gesamte Länge mit Heizeinrichtungen bestückt werden muss.

Darüber hinaus ist es günstig, wenn zum Beheizen des durch die Greifer gegriffenen Folienelements wenigstens eine Heizeinrichtung quer zu einer Zustellbewegungsrichtung eines Unterwerkzeugs und/oder eines Oberwerkzeugs bewegt wird, insbesondere in einen durch einen Drapierrahmen formulierten Drapierraum eingebracht wird. Hierdurch besteht die Möglichkeit, das Folienelement während oder nach der Beschickung in die Zuführ- und/oder Einlegestrecke und gegebenenfalls bis in einen Drapierraum bzw. Kaschierraum bzw. in den Drapierrahmen hinein nahezu auch ununterbrochen beheizen zu können.

Die vorliegenden Verfahren können weiter optimiert werden, wenn ein Folienelement und/oder eine Heizeinheit relativ gegenüber Greifern und/oder einem Drapierrahmen bewegt werden, während ein Folienelement zu einem Formteil geformt oder auf ein Trägerteil aufkaschiert wird. Hierbei kann ein neues Folienelement bereits beheizt werden, während beispielsweise ein anderes Folienelement bereits auf ein Trägerteil aufkaschiert wird.

Wird das Folienelement erst bei und/oder nach dem Beheizen zumindest teilweise dehnungsfrei und/oder zumindest dehnungsreduziert mit einer partiellen Foliendehnung von weniger als 10 %, vorzugsweise von weniger als 5 % mittels der Greifer vorgespannt, brauchen geringere Zugkräfte von dem Folienmaterial aufgenommen werden, um vorgedehnt zu werden.

Das Verfahren kann energetisch günstiger durchgeführt werden, wenn Heizelemente einer Heizeinrichtung in Abhängigkeit von der Größe des Folienelements eingeschaltet werden.

Das Verfahren kann kundenspezifischer durchgeführt werden, wenn das Folienelement mittels einer ersten Zustellbewegung, insbesondere einer vertikalen Hubbewegung, eines Unterwerkzeugs und/oder einer Zustellbewegung, insbesondere einer vertikale Senkbewegung, eines Oberwerkzeugs an das Formteil oder das Trägerteil angeformt bzw. aufkaschiert wird.

Kumulativ kann das Trägerteil mittels eines Oberwerkzeugs vorteilhaft an das Folienelement angenähert werden, insbesondere mit einer mehraxialen Bewegung.

Werden Greifer beim Zustellen eines Unterwerkzeugs an das durch die Greifer gegriffenen Folienelement in Zustellrichtung des Unterwerkzeugs und/oder entgegen der Zustellrichtung des Unterwerkzeugs und/oder quer zu der Zustellrichtung aktiv angetrieben bewegt, können Foliendehnungen besonders effektiv vermieden werden, insbesondere wenn die Greifer in Abhängigkeit von gemessenen Zugkräften bewegt werden.

Eine weitere Effizienzsteigerung kann vorliegend erzielt werden, wenn das Folienelement nach einem Aufkaschieren auf das Trägerteil optional mittels Greifer zumindest teilweise um einen Rand des Trägerteils umgebugt wird. Hierdurch kann das Folienelement bereits innerhalb des Drapierrahmens umgebugt werden.

Vorteilhaftweise kann hierdurch das Umbugen zu einem Zeitpunkt erfolgen, in welchem dem Folienelement und/oder dem Kleber noch mehr Wärmeenergie innewohnt, als zu einem späteren Zeitpunkt.

Da hierdurch nicht nur verfahrenstechnische Vorteile, sondern darüber hinaus auch fertigungstechnische Vorteile erzielt werden können, beispielsweise optische Vorteile hinsichtlich einer Umbugstelle, sind die Vorteile des Umbugens mit Greifern des Drapierrahmens auch ohne die übrigen Merkmale der Erfindung vorteilhaft.

Insofern ist es vorteilhaft, wenn das Folienelement zumindest teilweise innerhalb des Drapierrahmens um das Trägerteil umgebugt wird.

Das kaschierte Trägerteil kann schnellstmöglich weiterbearbeitet werden, wenn das geformte Folienelement oder das mit dem Folienelement kaschierte Trägerteil nach dem Freigeben durch die Greifer mittels einer Entnahmeeinrichtung an wenigstens einer nachgeschalteten Bearbeitungsvorrichtung für eine weitere Bearbeitung bereitgestellt wird.

Eine derartige Bearbeitungsmaschine kann beispielsweise eine Umbugvorrichtung, eine Stanzvorrichtung oder dergleichen sein. Hierdurch kann das kaschierte Trägerteil schnellstmöglich weiterbearbeitet werden.

Gemäß einem nicht erfindungsgemäßem Ausführungsbeispiel wird ein Verfahren zum Umrüsten einer Vorrichtung zum Formen und/oder Kaschieren eines Folienelements gezeigt, bei welchem für ein Umrüsten der Vorrichtung auf ein anderes Produkt ein Werkzeug der Vorrichtung ausgewechselt wird, wobei das Oberwerkezug und/oder das Unterwerkzeug des Werkzeugs ausgewechselt werden, und bei welchem zusätzlich zu dem Ober- und/oder Unterwerkzeug auch ein Drapierrahmen einschließlich Greifer zum Greifen des Folienelements ausgewechselt wird.

Hierbei kann der Drapierrahmen ein Teil des temporär an der Vorrichtung eingesetzten Werkzeugs sein und kann insofern gemeinsam mit dem Unter- und/oder Oberwerkzeug ausgewechselt werden, wenn dies bei einem Produktwechsel erforderlich sein sollte. Somit kann die entsprechende Vorrichtung wesentlich schneller auf ein neues Produkt umgerüstet werden, als dies bei bisherigen Lösungen möglich ist, bei denen ein Rahmenteil eines vergleichbaren Spannrahmens noch Bestandteil der eigentlichen Vorrichtung ist.

Gemäß einem nicht erfindungsgemäßem Ausführungsbeispiel wird ein Verfahren zum Formen und/oder Kaschieren eines Folienelements auf einem Trägerteil gezeigt, bei welchem das Folienelement und das Trägerteil zum Formen und/oder Kaschieren zueinander positioniert werden, wobei das Trägerteil zum Positionieren gegenüber dem Folienelement mehraxial im Raum, insbesondere in einem Drapierraum und/oder einem Kaschierraum, bewegt wird.

Hierdurch können das Folienelement und das Trägerteil, welche miteinander verbunden werden müssen, insbesondere vor dem Aufkaschieren signifikant besser und differenzierter zueinander positioniert werden, insbesondere bereichsweise sowie insbesondere innerhalb eines Kaschierraums bzw. eines Drapierraums.

Insofern ist es vorteilhaft, wenn das Trägerteil zum Positionieren gegenüber dem Folienelement mehraxial im Raum, insbesondere in einem Drapierraum und/oder einem Kaschierraum, an das Folienelement angenähert wird.

Eine nochmalige Verbesserung des Handlings von Folienelement und Trägerteil zueinander kann erzielt werden, wenn das Folienelement zum Positionieren gegenüber dem Trägerteil von Greifern gegriffen wird, wobei Greifer mehraxial im Raum, insbesondere gegenüber dem Trägerteil, bewegt werden.

Das Trägerteil kann auf unterschiedliche Weise mehraxial im Raum bewegt werden, beispielsweise durch einen entlang zweier Achsen translatorisch verlagerbaren Werkzeugtisch, auf welchen die Trägerteilaufnahme aufgespannt ist.

Besonders flexibel kann die Trägerteilaufnahme und damit auch das Trägerteil im Raum bewegt und hierdurch gegenüber dem Folienelement positioniert werden, wenn das Trägerteil mittels eines mehraxial beweglichen Manipulators gehalten und gegenüber dem Folienelement bewegt wird.

In diesem Zusammenhang ist es vorteilhaft, wenn eine Trägerteilaufnahme einer Vorrichtung zum Kaschieren eines Folienelements auf ein Trägerteil mehraxial im Raum, insbesondere in einem Drapierraum und/oder einem Kaschierraum, bewegt wird.

Gemäß einem nicht erfindungsgemäßem Ausführungsbeispiel wird ein Verfahren zum Fertigen eines kaschierten Bauteils aus einem Folienelement und einem Trägerteil gezeigt, bei welchem das Folienelement an einer Kaschiervorrichtung auf das Trägerteil aufkaschiert wird, und bei welchem anschließend das kaschierte Bauteil aus der Kaschiervorrichtung entnommen und für eine Weiterverarbeitung bereitgestellt wird, wobei das Trägerteil bzw. das kaschierte Bauteil zum Entnehmen aus der Kaschiervorrichtung mittels einer Entnahmeeinrichtung an seiner B-Seite gehalten wird.

Dadurch, dass das Trägerteil bzw. das kaschierte Bauteil ausschließlich an seiner B-Seite gehalten werden, sinkt die Gefahr einer Beschädigung der A-Seite erheblich und kann idealerweise zur Gänze ausgeschlossen werden.

Insbesondere ein kaschiertes Bauteil besitzt eine A-Seite (Gutseite) und eine B-Seite (Schlechtseite).

Die B-Seite kann hierbei die Rückseite des kaschierten Bauteils bzw. des Trägerteils sein, welche im verbauten Zustand des kaschierten Bauteils nicht mehr zu sehen ist und dementsprechend auch nicht vollflächig kaschiert ist.

Die A-Seite hingegen kann den sichtbaren Bereich im verbauten Zustand des kaschierten Bauteils definieren.

Insofern ist es vorteilhaft, dass kaschierte Bauteil während seines Herstellungsprozesses möglichst ausschließlich an seiner B-Seite zu greifen und zu halten.

Somit sieht eine bevorzugte Verfahrensvariante vor, dass das Trägerteil bzw. das kaschierte Bauteil mittels der Entnahmeeinrichtung an seiner B-Seite gehalten aus der Kaschiervorrichtung entnommen und an seiner B-Seite durchgängig gehalten an eine nachfolgende Bearbeitungsstation übergeben wird, wodurch die A-Seite besser geschont werden kann.

Eine bevorzugte Verfahrensvariante sieht vorteilhaft vor, dass das an seiner B-Seite gehaltene Trägerteil bzw. das kaschierte Bauteil bei der Entnahme aus der Kaschierstation, bei der Übergabe von der Kaschiervorrichtung an eine nachgeschalteten Bearbeitungsstation, insbesondere an eine nachgeschalteten Umbugvorrichtung, und/oder bei einem Einlegen in eine Bearbeitungsposition an der nachgeschalteten Bearbeitungsstation, insbesondere in eine Umbugbearbeitungsposition an der nachgeschalteten Umbugvorrichtung, durchgängig von der Entnahmeeinrichtung gehalten wird.

Der Handhabungsprozess des Trägerteils bis zu dem kaschierten Bauteil kann weiter wesentlich vereinfacht werden, wenn das Trägerteil von seinem Aufheben aus einer Bereitstellungsposition, insbesondere aus einem Trägerteil-Magazin, heraus bis in eine Drapierposition und eine Kaschierposition der Kaschiervorrichtung sowie in eine Bearbeitungsposition einer nachgeschalteten Bearbeitungsstation hinein nur ein einziges Mal von der Entnahmeeinrichtung gegriffen und durchgängig gehalten wird, und zwar an seiner B-Seite.

Insofern ist es hinsichtlich einer einfachen und schonenden Handhabung des Trägerteils bzw. des kaschierten Bauteils vorteilhaft, wenn das Trägerteil während des Aufkaschierens des Folienelements auf das Trägerteil an seiner B-Seite gehalten wird.

Alle Verfahrensschritte ergeben den Vorteil, dass auf eine Vielzahl an bisher ansonsten erforderlichen Übergabeschritten verzichtet werden kann.

Vorteilhafterweise ist hierbei die Entnahmeeinrichtung gleichzeitig auch die Einbringeinrichtung, wobei diese beiden Einrichtungen eine gemeinsame Transfereinrichtung bzw. Transferstation verkörpern, wir dies bereits vorstehend bereits beschrieben ist. Vorteilhafterweise weist diese Transferstation eine Robotereinrichtung mit einem mehraxial beweglichen Manipulator auf.

Mit der vorliegenden Erfindung können sowohl eine kritische Folienmaterialdehnung verhindert und ein Folienverbrauch signifikant reduziert werden. Ferner kann durch die Möglichkeit des Einsatzes von hoch präzisen Folienelementzuschnitten ein bisher noch nicht möglicher Automatisierungsgrad an Vorrichtungen zum Formen und/oder Kaschieren eines Folienelements und Anlagen zum Fertigen eines geformten und/oder eines kaschierten Bauteils erzielt werden.

Ein Folienmaterialverbrauch kann darüber hinaus signifikant weiter reduziert werden, wenn das Folienelement an designierten später nicht sichtbaren Bereichen eines kaschierten Bauteils partiell mehr gedehnt wird, als in designierten sichtbaren Bereichen des kaschierten Bauteils.

An dieser Stelle sei noch erwähnt, dass die vorliegende Erfindung auf nahezu alle gängigen Kaschierverfahren, wie beispielsweise Presskaschieren, Vakuumkaschieren, In-Mould-Graining-Verfahren (IMG-Verfahren) oder dergleichen anwendbar ist.

Insofern ist es vorteilhaft, wenn das Folienelement nach dem Abwickeln an dem Trägerteil bzw. Auflegen auf das Trägerteil mittels Aufbringens eines Differenzdrucks an das Formteil oder das zu kaschierende Trägerteil angeformt wird.

Der Begriff "Differenzdruck" beschreibt in der Bedeutung der Erfindung unterschiedlichste Druckbeaufschlagungen der beteiligten Bauteile, insbesondere des Folienelements, etwa mittels eines Unterdrucks bzw. Vakuums, wodurch das Folienelement ausschließlich oder unterstützend mit dem Trägerteil formend in Wirkkontakt gebracht werden kann.

Kumulativ oder alternativ kann eine entsprechende Druckbeaufschlagung vorliegend aber auch durch Presseinrichtungen oder dergleichen erfolgen.

Insofern umfasst die hier offenbarte Erfindung bei entsprechender Ausgestaltung der Erfindung bzw. der konstruktiven und verfahrenstechnischen Gegenstände nicht nur Vakuumkaschieren, sondern darüber hinaus auch Presskaschieren, oder dergleichen.

Das bedeutet, dass insbesondere die vorliegende Vorrichtung als Differenzdruck erzeugende Einrichtung eine Vakuumeinrichtung mit einem Vakuumwerkzeug und/oder eine Presseinrichtung mit einem Presswerkzeug aufweisen kann.

Mittels der hier vorgeschlagenen Erfindung können ein Formen bzw. Kaschieren eines Folienelements besonders flexibel durchgeführt werden, da sich durch die Erfindung nahezu unbegrenzte Einstell- und Verfahrensmöglichkeiten ergeben.

Es versteht sich, dass Merkmale der vorstehend bzw. in den Ansprüchen beschriebenen Lösungen gegebenenfalls auch kombiniert werden können, um vorliegend Vorteile und Effekte entsprechend kumuliert umsetzen zu können.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine Aufsicht eines Drapierrahmens mit insgesamt zehn Greifern zum Greifen eines Folienelements, wobei jeder der Greifer gegenüber dem Drapierrahmen sieben Freiheitsgrade hinsichtlich seiner Greifbackenelemente aufweist;
- Figur 2: schematisch eine perspektivische Ansicht eines der Greifer aus der Figur 1;
- Figur 3: schematisch eine beispielhafte Darstellung einer Abwicklung eines Folienelements an einem zu kaschierenden Trägerteil;
- Figur 4: schematisch eine Ansicht eines ersten testkaschierten Bauteils bei einer Foliendehnung von weniger als 20 %;
- Figur 5: schematisch eine Detailansicht des ersten Bauteils aus der Figur 4;
- Figur 6: schematisch eine Ansicht eines zweiten testkaschierten Bauteils bei einer Foliendehnung von weniger als 20 %;
- Figur 7: schematisch eine Detailansicht des zweiten Bauteils aus der Figur 6;
- Figur 8: schematisch eine Ansicht eines dritten testkaschierten Bauteils bei einer Foliendehnung von weniger als 20 %;
- Figur 9: schematisch eine Detailansicht des dritten Bauteils aus der Figur 8;
- Figur 10: schematisch eine erste perspektivische Ansicht einer ersten Vorrichtung zum Formen und/oder Kaschieren eines Folienelements mit einem Drapierrahmen, bei welcher das Folienelement in einer Beladeposition auf einer unteren Heizeinrichtung einer mitfahrenden Heizeinheit abgelegt ist;
- Figur 11: schematisch eine zweite perspektivische Ansicht der ersten Vorrichtung aus der Figur 10 mit der heizenden und mit dem Folienelement mitfahrenden Heizeinheit;
- Figur 12: schematisch eine dritte perspektivische Ansicht der ersten Vorrichtung aus den Figuren 10 und 11 mit der eingefahrenen Heizeinheit, welche nun deckungsgleich mit dem Drapierrahmen angeordnet ist;
- Figur 13: schematisch eine vierte perspektivische Ansicht der ersten Vorrichtung aus den Figuren 10 bis 12 mit einer hochwärts verfahrenen unteren Heizeinrichtung zum Übergeben des Folienelements an Greifer des Drapierrahmens;
- Figur 14: schematisch eine fünfte perspektivische Ansicht der ersten Vorrichtung aus den Figuren 10 bis 13 mit in die Beladeposition zurückfahrender Heizeinheit;
- Figur 15: schematisch eine sechste perspektivische Ansicht der ersten Vorrichtung aus den Figuren 10 bis 14 mit einem in Richtung eines Unterwerkzeugs abgesenkten Drapierrahmens und einem über den Drapierrahmen an einem Roboter angeordneten Oberwerkzeug mit einer Trägerteilaufnahme, welches das Trägerteil hält;
- Figur 16: schematisch eine siebte perspektivische Ansicht der ersten Vorrichtung aus den Figuren 10 bis 15 mit einem mittels des Roboters auf das Folienelement abgesenkten Trägerteils;
- Figur 17: schematisch eine achte perspektivische Ansicht der ersten Vorrichtung aus den Figuren 10 bis 16 in einer Kaschierposition;
- Figur 18: schematisch eine neunte perspektivische Ansicht der ersten Vorrichtung aus den Figuren 10 bis 17 nach dem Kaschierprozess, wobei das kaschierte Trägerteil mittels des Roboters an eine Vorrichtung zum Beschneiden des kaschierten Trägerteil übergeben wird;
- Figur 19: schematisch eine zehnte perspektivische Ansicht der ersten Vorrichtung aus den Figuren 10 bis 18 mit der heizenden und mit dem Folienelement mitfahrenden Heizeinheit, bei welcher der Roboter ein neues Trägerteil aufnimmt;
- Figur 20: schematisch eine perspektivische Ansicht einer ersten Anlage zum Fertigen eines geformten und/oder eines kaschierten Bauteils mit einer Vorrichtung zum Formen und/oder Kaschieren eines Folienelements auf ein Trägerteil und mit einer inline nachgeschalteten Stanz- und Umbugstation sowie einer inline nachgeschalteten Austragsstation;
- Figur 21: schematisch eine perspektivische Ansicht einer zweite Anlage zum Fertigen eines geformten und/oder eines kaschierten Bauteils mit einer Vorrichtung zum Formen und/oder Kaschieren eines Folienelements auf ein Trägerteil und mit einer inline nachgeschalteten Stanz- und Umbugvorrichtung;
- Figur 22: schematisch eine perspektivische Ansicht einer dritte Anlage zum Fertigen eines geformten und/oder eines kaschierten Bauteils mit einer Vorrichtung zum Formen und/oder Kaschieren eines Folienelements auf ein Trägerteil umfassend zwei Heizeinheiten zur Taktzeitverkürzung, und mit einer inline nachgeschalteten Stanz- und Umbugvorrichtung;
- Figur 23: schematisch eine perspektivische Ansicht einer Doppelanlage zum Fertigen eines geformten und/oder eines kaschierten Bauteils mit zwei Vorrichtungen zum Formen und/oder Kaschieren eines Folienelements auf ein Trägerteil und mit zwei inline nachgeschalteten Stanz- und Umbugvorrichtungen;
- Figur 24: schematisch eine Aufsicht der in der Figur 23 gezeigten Doppelanlage;
- Figur 25: schematisch eine perspektivische Ansicht einer weiteren Anlage zum Fertigen eines geformten und/oder eines kaschierten Bauteils mit einer Vorrichtung zum Formen und/oder Kaschieren eines Folienelements auf ein Trägerteil, mit einer inline vorgeschalteten Kleberauftragsstation und mit einer inline nachgeschalteten Stanz- und Umbugstation; ausgeführt als Doppelanlage;
- Figur 26: schematisch eine Seitenansicht einer Vorrichtung zum Formen und/oder Kaschieren eines Folienelements mit einem Drapierrahmen, wobei die Vorrichtung beispielhaft mit einer Einrichtung zum automatisierten Beschicken von Folienelementen ausgerüstet ist;
- Figur 27: schematisch eine Aufsicht eines vorkonfektionierten Folienelements;
- Figur 28: schematisch eine Aufsicht eines optimierten Schnittmusters einer Vielzahl an Folienelementen;
- Figur 29: schematisch eine Aufsicht einer ersten kombinierten Kaschier-/Umbugvorrichtung mit an einem Drapierrahmen angeordneten Umbugschiebern;
- Figur 30: schematisch eine Aufsicht einer zweiten kombinierten Kaschier-/Umbugvorrichtung mit an Greifern angeordneten Umbugschiebern;
- Figur 31: schematisch eine Aufsicht einer vierten kombinierten Kaschier-/Umbugvorrichtung mit an einer Kaschierstation angeordneten Umbugschiebern;
- Figur 32: schematisch eine Aufsicht einer dritten kombinierten Kaschier-/Umbugvorrichtung mit an einem weiteren Rahmenteil angeordneten Umbugschiebern;
- Figur 33: schematisch eine Aufsicht eines alternativen Greifers umfassend ein Greiferchassis und ein Greiferkopfteil mit einem Drehantrieb umfassend ein Schneckengetriebe; und
- Figur 34: schematisch eine perspektivische Teilansicht einer Vorrichtung zum Formen und/oder Kaschieren eines Folienelements auf einem Trägerteil mit segmentierten Stanzmessersegmenten und Dichtschiebersegmenten.

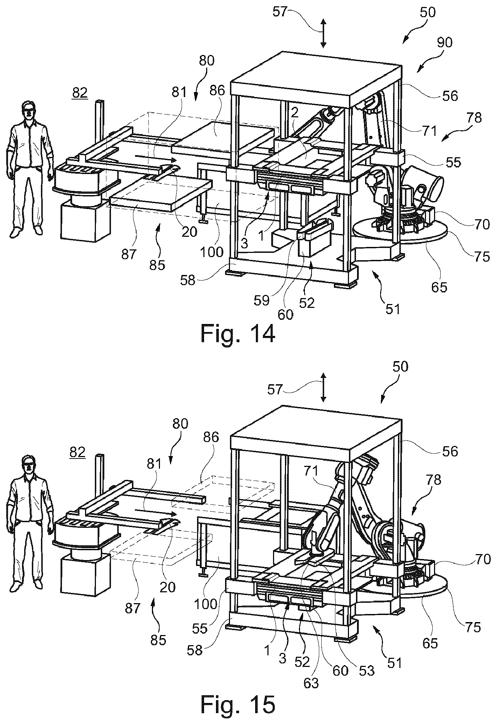

Figur 15 zeigt eine Vorrichtung nach Anspruch 1. Die übrigen Figuren sind zur Erläuterung des allgemeinen technologischen Hintergrunds dargestellt.

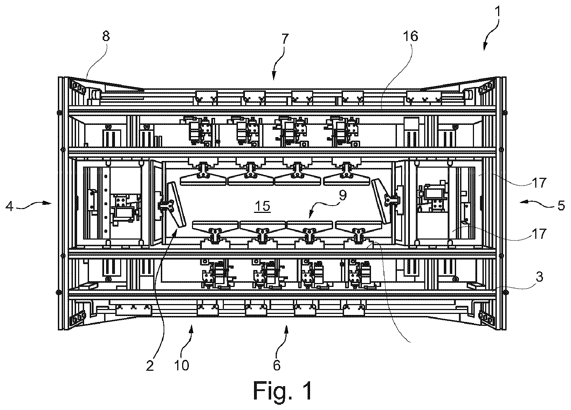

Gemäß der Darstellung nach der Figur 1 ist beispielhaft ein Drapierrahmen 1 gezeigt, welcher eine Vielzahl an motorisch angetriebenen Greifern 2 trägt.

Der Drapierrahmen 1 weist ein Rahmenteil 3 auf, welches zumindest an seinen vier Seitenwandbereichen 4, 5, 6 und 7 mit einem Gehäuse 8 umbaut ist.

An der Unterseite 9 beziehungsweise an der Oberseite 10 ist der Drapierrahmen 1 zumindest teilweise offen.

Genauer gesagt ist das Gehäuse 8 des Drapierrahmens 1 oberhalb und unterhalb eines mittig angeordneten Drapierraums 15 des Drapierrahmens 1 offen, wobei hinsichtlich der Darstellung nach der Figur 1 die obere Gehäuseseite demontiert ist, um einen Blick auf das Rahmenteil 3 und die daran beweglich gelagerten Greifer 2 freizugeben.

Das Rahmenteil 3 des Drapierrahmens 1 zeichnet sich durch einige Längstraversen 16 (hier nur exemplarisch beziffert) und Quertraversen 17 (nur exemplarisch beziffert) aus, an welchen die Greifer 2 innerhalb des Drapierrahmens 1 gehaltert sind.

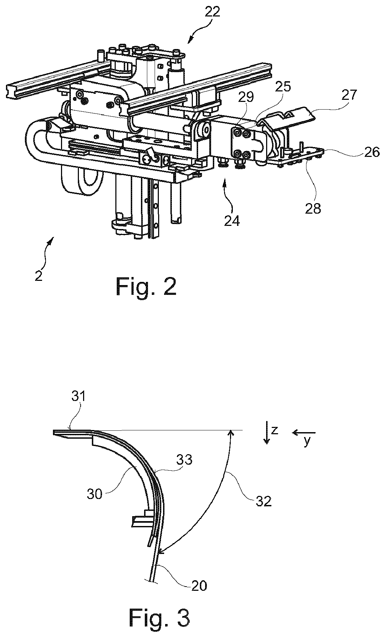

Jedenfalls sind die einzelnen Greifer 2 jeder für sich derart an dem Drapierrahmen 1 beziehungsweise in dem Drapierraum 15 gelagert, dass den Greifern 2 insgesamt mindestens sieben Freiheitsgrade innewohnen, wodurch ein Folienelement 20 (siehe exemplarisch Figur 3) extrem differenziert gegriffen und innerhalb des Drapierraums 15 drapiert sowie geführt werden kann.

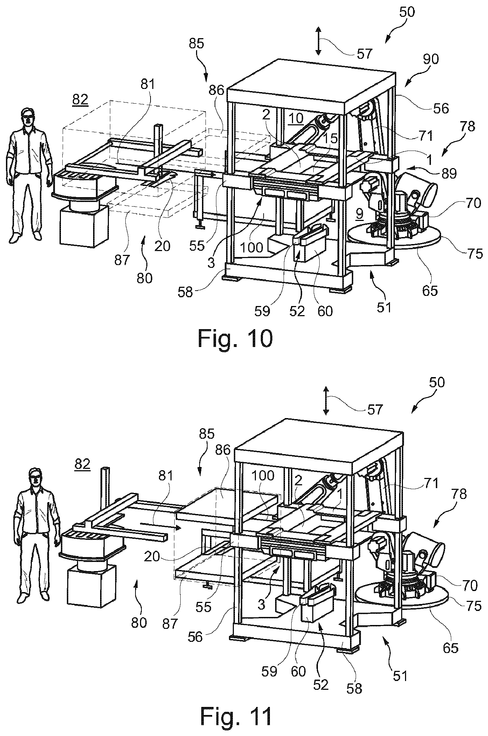

Der Drapierraum 15 ist hierbei durch hinein verlagerbare Heizeinrichtungen (hier nicht gezeigt, siehe beispielsweise ab Figur 10) sowohl von der Unterseite 9 her als auch von der Oberseite 10 her beheizbar.

Eine derartige Heizeinrichtung kann im Grunde genommen von jedem Seitenbereich 4, 5, 6 beziehungsweise 7 aus in den Drapierrahmen 1 beziehungsweise dessen Drapierraum 15 eingebracht werden, bevorzugt hierfür sind jedoch der vordere Seitenbereich 6 beziehungsweise der hintere Seitenbereich 7.

Gemäß der Darstellung nach der Figur 2 ist beispielhaft ein Greifer 2 des Drapierrahmens 1 dargestellt, wobei der Greifer 2 ein Greiferchassis 22 besitzt, an dessen Vorderseite 23 ein Greiferkopfteil 24 angeordnet ist, an welchem die eigentlichen Greiferbackenelemente 25 und 26 des Greifers 2 gelagert sind.

Während das Greiferchassis 22 mit insgesamt 6 Freiheitsgraden an dem Drapierrahmen 1 gelagert ist, besitzt das Greiferkopfteil 25 gegenüber dem Greiferchassis 22 zumindest einen weiteren Freiheitsgrad, so dass insbesondere die Greiferbackenelemente 26 und 27 im Drapierraum 15 mindestens 7 Freiheitsgrade besitzen.

Es versteht sich, dass bei gegebener Ausgestaltung der Konstruktion auch andere Freiheitsgradkombinationen zwischen Greiferchassis 22 und Drapierrahmen 1 beziehungsweise dem Greiferkopfteil 25 und dem Greiferchassis 22 möglich sind.

Zumindest bei diesem Ausführungsbeispiel ist das Greiferkopfteil 25 des Greifers 2 gegenüber dem Greiferchassis 22 des Greifers 2 dreidimensional verstellbar, wobei die hierbei an dem Greiferkopfteil 25 erzielten Freiheitsgrade von den Freiheitsgraden des Greiferchassis verschieden sind.

Eine weitere Besonderheit des Greifers 2 darin zu sehen, dass der Greifer 2 temperierbare Greiferbackenelemente 26 und 27 aufweist, so dass sich diese Greiferbackenelemente 26 und 27 hinsichtlich eines zu greifenden Folienelements 20 mittels aktivierbare Temperiermittel 28 temperaturmäßig an besondere Gegebenheiten bzw. Anforderungen anpassen können.

So ist es beispielsweise äußerst vorteilhaft, wenn zumindest eines der Greiferbackenelemente 26 beziehungsweise 27 gekühlt werden kann.

Ein gekühltes Greiferbackenelement 26 beziehungsweise 27 ist besonders dann vorteilhaft, wenn das Folienelement 20 zum Aufkaschieren auf einem Trägerteil 30 (siehe beispielsweise Figur 3) mit Kleber versehen ist, da das gekühlte Greiferbackenelement 26 beziehungsweise 27 eine weniger intensive Verbindung mit dem Kleber eingehen kann, wodurch das gekühlte Greiferbackenelement 26 beziehungsweise 27 signifikant weniger stark durch den Kleber verschmutzt wird.

In diesem Ausführungsbeispiel ist insbesondere das untere Greiferbackenelement 26 temperierbar im Sinne einer Kühlung, da nur dieses mit Kleber behaftete Seite des Folienelements 20 in Wirkkontakt tritt, wenn dieses Folienelement 20 in den Greifer 2 eingelegt wird.

Ferner ist der Greifer 2 noch mit Zugkräftemessmitteln 29 ausgestattet, welche an dem Greiferkopfteil 25 angeordnet sind. Mittels der Zugkräftemessmittel 29 können zwischen dem Folienteil 20 und dem Greifer 2 wirkende Zugkräfte detektiert und gemessen werden. Hierbei kann dann in Abhängigkeit von ermittelten Zugkräften der Greifer 2 in dem Drapierraum 15 und gegenüber dem Folienelement 20 bewegt werden, um kritische Foliendehnungen zu vermeiden.

Gemäß der Darstellung nach der Figur 3 ist beispielhaft gezeigt, wie es mit dem mehraxial im Raum beweglichen Greifer 2 möglich ist, insbesondere in Bereichen des Trägerteils 30 ohne Hinterschneidungen, das Folienelement 20 lediglich an der Kontur 31 des Trägerteils 30 abzuwickeln.

Bevorzugt wird das Folienelement 20 sogar vollständig zugkräftefrei auf der Kontur 31 des Trägerteils 30 abgewickelt, so dass einerseits das Folienelement 20 besonders material- und oberflächenschonend aufkaschiert werden kann. Andererseits kann das Folienelement 20 durch die Greifer 2 mit ihren sieben Freiheitsgraden nahezu dehnungsfrei beziehungsweise zumindest dehnungsreduziert auf das zu kaschierende Trägerteil 30 aufgetragen werden.

Gemäß der vereinfachten Darstellung nach der Figur 3 durchläuft hierbei insbesondere das Greiferkopfteil 25 des Greifers und im Besonderen auch die Greiferbackenelemente 26 und 27 eine Annäherungskurve 32, um das Folienelement 20 im einfachsten Fall durch eine Bewegung des Greifers 2 in Z- und Y-Richtung auf das zugkräftefrei abzuwickeln.

Besonders vorteilhaft ist es, wenn das Folienelement 20 zumindest mittels einiger der Greifer 2 unter Umgehung einer Reckung beziehungsweise Verstreckung des Folienelements 20 mit dem zu kaschierenden Trägerteil 25 in Wirkkontakt gebracht werden kann, so dass sich das Folienelement 20 zumindest beim Anbringen an das zu kaschierende Trägerteil 30 mit den Greifern 2 wenn überhaupt nur sehr gering dehnen kann, so dass es auch nach dem Aufkaschieren des Folienelements 20 auf dem Trägerteil 30 an dessen sichtbaren Oberfläche es kaum zu Verzerrungen kommt.

Dies ist besonders bei empfindlichen, sichtbaren Oberflächen 33 beziehungsweise bei Oberflächen, welche etwa eine Struktur aufweisen, vorteilhaft.

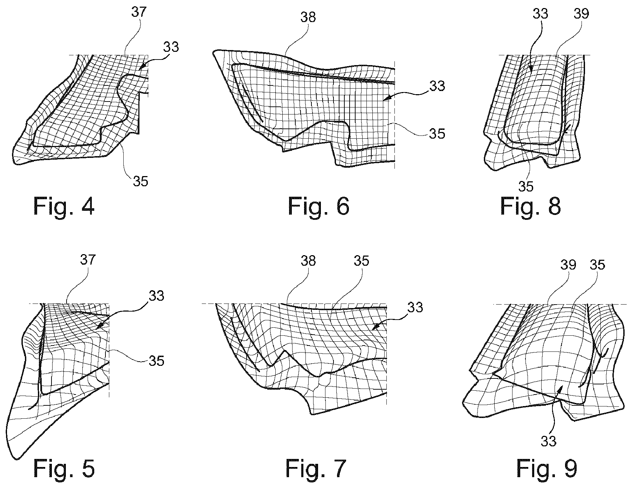

Hierzu sind gemäß den Darstellungen nach den Figuren 4 bis 9 drei Beispiele von kaschierten Trägerteilen 30 aus dem Automotivebereich dargestellt, an deren sichtbaren Oberflächen 33 beispielhaft ein Raster 35 aufgetragen.

Anhand des Rasters 35 ist gut zu erkennen, dass sich bei allen Automotive-Bauteilen 37, 38 und 39 trotz Biegungen und teilweise vorhandenen Freiformkonturen kaum nennenswerte Verzerrungen an dem Raster 35 ergeben. Vielmehr beschränkt sich die Foliendehnung partieller auf 10 % bis 15 %.

Ein erstes Ausführungsbeispiel einer vorteilhaften Vorrichtung 50 zum Formen und/oder Kaschieren eines Folienelements 20 auf ein Trägerteil 30 ist exemplarisch gemäß den Darstellungen nach den Figuren 10 bis 19 gezeigt und hier erläutert, wobei anhand der einzelnen Figuren 10 bis 19 unterschiedliche Verfahrensschritte an der Vorrichtung 50 beispielhaft gezeigt sind.

Die Vorrichtung 50 ist von ihrem Grundkonzept her auch für die weiteren Ausführungsbeispiele relevant. Insofern wird die Vorrichtung 50 auch für die weiteren Ausführungsbeispiele exemplarisch beschrieben, um insgesamt Wiederholungen zu vermeiden.

Die Vorrichtung 50 zeichnet sich in erster Linie durch ein Rahmenteil 3 eines Kaschierwerkzeugs 51 aus, welches in diesem Ausführungsbeispiel einen Drapierrahmen 1 mit einer Vielzahl an motorisch angetriebenen Greifern 2 umfasst.

Die Vorrichtung 50 zeichnet sich ferner durch weitere Bauteile des Kaschierwerkzeugs 51 aus, welches im Wesentlichen ein Unterwerkzeug 52 sowie ein Oberwerkzeug 53 (siehe insbesondere auch ab Figur 15) umfassen.

Der Drapierrahmen 1 und damit auch die Greifer 2 sind mittels eines Verfahrmechanismus 55 höhenverstellbar in einem Gestell 56 der Vorrichtung 50 gelagert, so dass der gesamte Drapierrahmen 1 entlang einer vertikal Verlagerungsachse 57 der Vorrichtung 50 höhenverstellbar an dem Gestell 56 gelagert ist.

Unterhalb des Drapierrahmens 1 an einem Bodenteil 58 des Gestells 56 ist das Unterwerkzeug 52 platziert, wobei das Unterwerkzeug 52 ein oder mehrere Formschalenteile 59 umfasst, welche wiederum auf einem Sockel 60 des Bodenteils 58 angeordnet sind.

Das Oberwerkzeug 53 hingegen umfasst eine Trägerteilaufnahme 63, mittels welcher ein oder mehrere zu kaschierenden Trägerteile 30 insbesondere in den Drapierrahmen 1 der Vorrichtung 50 automatisiert eingebracht werden können.

Zum automatisieren Einbringen des jeweiligen Trägerteils 30 ist an der Vorrichtung 50 eine entsprechende Einbringeinrichtung 65 vorgesehen, welche in diesem Ausführungsbeispiel eine Robotereinrichtung 70 mit einem mehraxialen beweglichen Manipulator 71 umfasst.

Diese Robotereinrichtung 70 mit ihren mehraxialen beweglichen Manipulator 71 dient jedoch nicht nur dem Einbringen des zu kaschierenden Trägerteils 30 in die Vorrichtung 50, insbesondere in den Drapierraum 15 des Drapierrahmens 1, sondern darüber hinaus auch dem Entnehmen des fertig kaschierten Bauteils 37, 38 oder 39 (vgl. hierzu Figuren 4 bis 9), so dass die Robotereinrichtung 70 sogleich auch eine Entnahmeeinrichtung 75 an der Vorrichtung 50 darstellt.

Insgesamt kann die Robotereinrichtung 70 aufgrund ihrer Doppelfunktion als Einbringeinrichtung 65 einerseits und als Entnahmeeinrichtung 75 andererseits als eine gemeinsame Transferstation 78 für die Vorrichtung 50 angesehen werden.

Darüber hinaus verfügt die Vorrichtung 50 noch über eine Zuführ- und/oder Einlegeeinrichtung 80, mittels welcher ein oder mehrere Folienelemente 20 bis in den Drapierrahmen 1 hineingeführt werden kann, und zwar derart, dass das Folienelement 20 sogleich in geöffnete Greifer 2 eingelegt werden kann, insbesondere auf die unteren Greiferbackenelemente 26 der geöffneten Greifer 2.

Die Zuführ- und/oder Einlegeeinrichtung 80 besitzt hierfür eine Zuführ- und/oder Einlegestrecke 81, entlang welcher das jeweilige Folienelement 20 ausgehend von einer Beschickungsposition 82 bis in den Drapierraum 15 hineingefördert werden kann.

Die Zuführ- und/oder Einlegestrecke 80 beziehungsweise deren Zuführ- und/oder Einlegestrecke 81 verläuft hierbei quer zu der Vertikalverlagerungsachse 57 der Vorrichtung 50.

Im Umkehrschluss bedeutet dies, dass der Drapierrahmen 1 mittels des Verfahrmechanismus 55 quer verlagerbar zu dieser Zuführ- und/oder Einlegestrecke 81 verlaufend angeordnet ist.

In diesem ersten Ausführungsbeispiel zeichnet sich die Zuführ- und/oder Einlegeeinrichtung 80 insbesondere durch wenigstens eine verfahrbare Heizeinheit 85 zum Beheizen des jeweiligen Folienelements 20 außerhalb des Drapierraums 15 des Drapierrahmens 1 aus, welche zwei Heizeinrichtungen 86 und 87 aufweist.

Hierbei ist die Heizeinheit 85 derart in die Zuführ- und/oder Einlegeeinrichtung 80 integriert, dass die Heizeinheit 85 gemeinsam mit dem jeweiligen Folienelement 20 beispielsweise kontinuierlich bewegt werden kann, welches entlang der Zuführ- und/oder Einlegestrecke 81 in Richtung des Drapierraums 15 des Drapierrahmens 1 bewegt wird.

In diesem Ausführungsbeispiel werden insofern die obere Heizeinrichtung 86 und die untere Heizeinrichtung 87 der Heizeinheit 85 gemeinsam mit dem Folienelement 20 entlang der Zuführ- und/oder Einlegestrecke 81 bewegt, so dass das jeweilige Folienelement 20 kontinuierlich sowohl von oben als auch von unten beheizt werden kann.

Im Speziellen ist hierbei die untere Heizeinrichtung 87 derart ausgestaltet, dass das jeweilige Folienelement 20 mittels dieser unteren Heizeinrichtung 87 von der Beschickungsposition 82 bis zu dem Drapierrahmen 1 der Vorrichtung 50 transportiert werden kann.

Gemäß der Darstellung nach der Figur 10 ist auf der unteren Heizeinrichtung 87 bereits ein Folienelement 20 aufgelegt und befindet sich mit Hilfe der verfahrbaren Heizeinheit 85 von der Beschickungsposition 82 auf den Weg zu dem Drapierrahmen 1.

Während das Folienelement 20 nun mittels der oberen Heizeinrichtung 86 und der unteren Heizeinrichtung 87 beidseits beheizt wird, wird es gleichzeitig mit den Heizeinrichtungen 86 und 87 entlang der Zuführ- und/oder Einlegestrecke 81 transportiert.

Der Drapierrahmen 1 befindet sich hierbei in einer Zuführposition 89, in welcher das mittels der Zuführ- und/oder Einlegeeinrichtung 80 transportierte Folienelement 20 bis in den Drapierraum 15 transportiert werden kann.

Hierbei befindet sich die Robotereinrichtung 70 noch in einer Startposition 90, in welcher wenigstens ein zu kaschierendes Trägerteil 30 in die Trägerteilaufnahme 63 aufgenommen wird, und zwar aus einem Trägerteilmagazin 100.

Gemäß der Darstellung nach der Figur 11 befindet sich die Heizeinheit 85 mit dem Folienelement 20 kurz vor dem Zuführen beziehungsweise Einlegen in den Drapierrahmen 1.

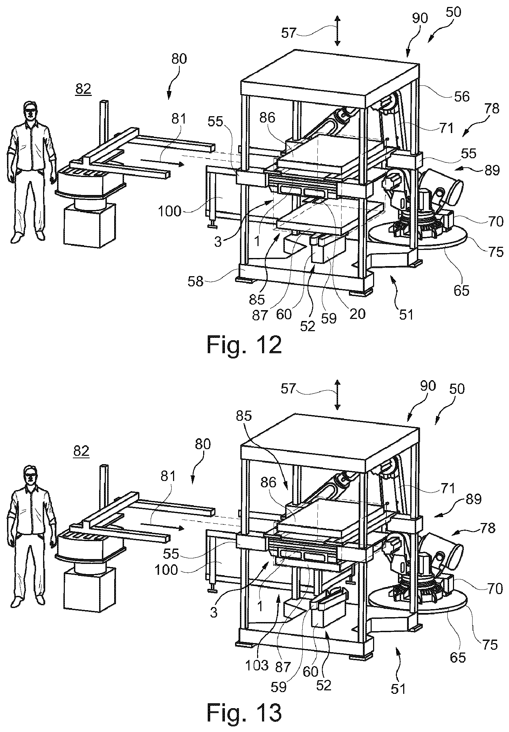

Gemäß der Darstellung nach der Figur 12 ist die Heizeinheit 85 mitsamt dem hiermit beheizten Folienelement 20 vollständig in die Vorrichtung 50 eingefahren.

Gemäß der Darstellung nach der Figur 13 verfährt die untere Heizeinrichtung 87 hochwärts auf den Drapierrahmen 1 zu, so dass in dieser Einlegeposition 103 das beheizte Folienelement 20 an die Greifer 2 des Drapierrahmens 1 übergeben beziehungsweise in diese Greifer 2 eingelegt werden können.

Sobald eine einstellbare Zieltemperatur an dem Folienelement 20 beziehungsweise in dem Drapierraum 15 erreicht ist, fährt die Heizeinheit 85 mit ihren Heizeinrichtungen 86 und 87 wieder zurück in die Beschickungsposition 82, um dort ein oder mehrere neue Folienelemente 20 aufzunehmen.

Gemäß der Darstellung nach der Figur 15 verfährt nun der Drapierrahmen 1 mit dem darin drapierten Folienelement 20 runterwärts auf das Unterwerkzeug 52 zu, wobei zwischenzeitlich das an der Trägerteilaufnahme 63 befindliche Trägerteil 30 mittels des Manipulators 71 der Robotereinrichtung 70 oberhalb des Drapierraums 15 des Drapierrahmens 1 positioniert ist.

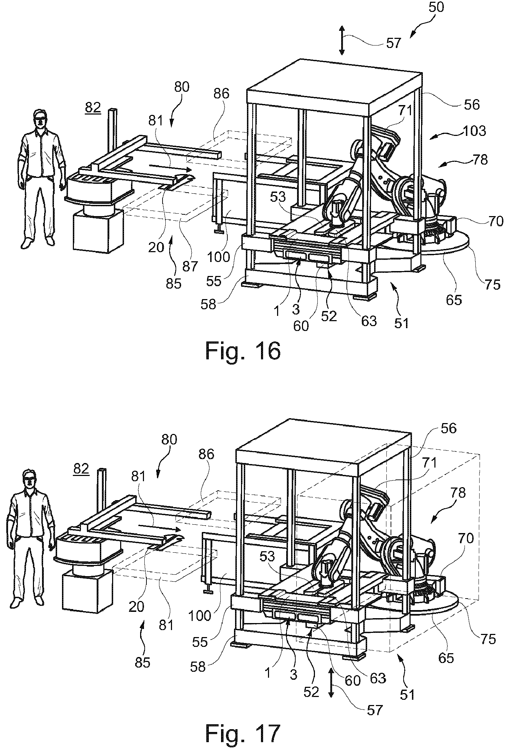

Gemäß der Darstellung nach der Figur 16 wird nun das zu kaschierende Trägerteil 30 weiter mittels des Manipulators 71 der Robotereinrichtung 70 an das Folienelement 20 gebracht, so dass gemäß der Darstellung nach der Figur 17 letztendlich der eigentliche Vakuumkaschierprozess an der Vorrichtung 50 durchgeführt wird.

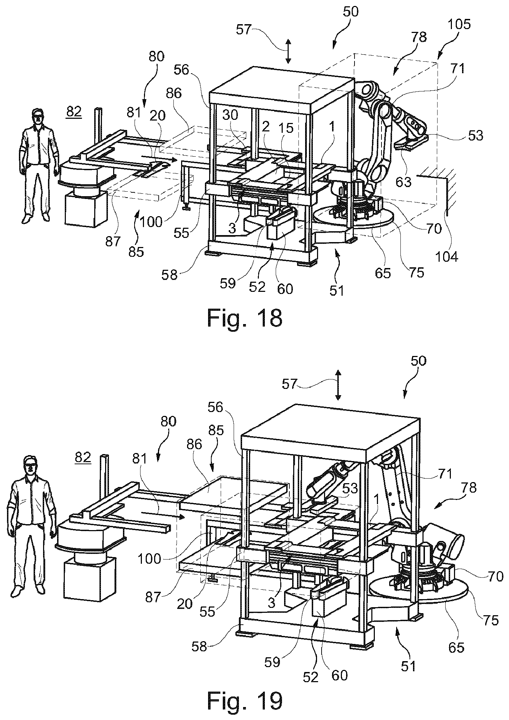

Nach dem erfolgreichen Kaschieren des Trägerteils 30 mit dem Folienelement 20 entnimmt die Robotereinrichtung 70 das fertig kaschierte Bauteil 37, 38 oder 39 aus dem Drapierrahmen 1 und legt dieses in eine bevorzugt gekühlte Beschneidestation 104 (nur exemplarisch in Figur 18 angedeutet), wobei sich die Robotereinrichtung 70 hierbei in einer Bereitstellungsposition 105 befindet, in welcher er das fertige kaschierte Bauteil 37, 38 oder 39 für eine Weiterbearbeitung oder dergleichen an der Vorrichtung 50 bereitstellt.

Gemäß der Darstellung nach der Figur 19 verfährt der Manipulator 71 der Robotereinrichtung 70 die Trägerteilaufnahme 63 wieder an das Trägerteilmagazin 102 heran, um erneut zu kaschierendes Trägerteil 30 aufzunehmen.

Gleichzeitig wird für einen neuen Kaschiervorgang mittels der Zuführ- und/oder Einlegeeinrichtung 80 ein neues Folienelement 20 entlang der Zuführ- und/oder Einlegestrecke 81 in Richtung Drapierrahmen 1 transportiert, welches gleichzeitig mittels der Heizeinheit 85 beidseits beheizt wird.

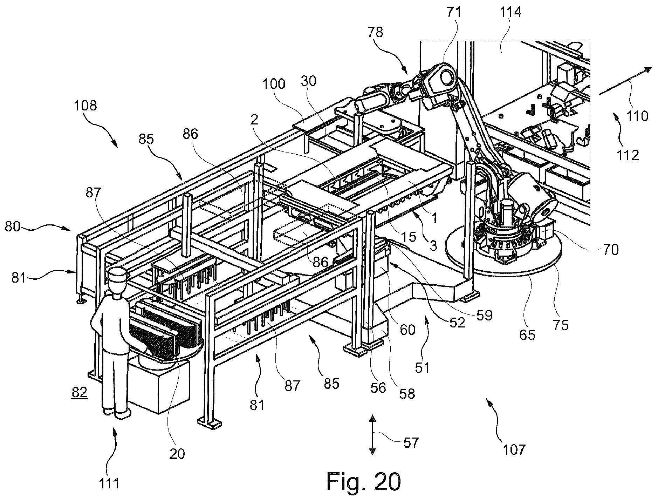

Gemäß der Darstellung nach der Figur 20 ist ein erstes Anlagenausführungsbeispiel mit einer ersten Anlage 107 zum Fertigen eines geformten und/oder kaschierten Bauteils 37, 38 beziehungsweise 39 gezeigt, wobei die erste Anlage 107 eine alternative, zweite Vorrichtung 108 zum Formen und/oder Kaschieren eines Folienelements 20 integriert hat. Genauer gesagt ist die zweite Vorrichtung 108 in der Bearbeitungslinie 110 der ersten Anlage 107 integriert, wobei der zweite Vorrichtung 108 inline der Bearbeitungslinie 110 eine nicht weiter gezeigte Stanz- und Umbugstation 114 nachgeschaltet ist.

Die der Bearbeitungslinie 110 verläuft hierbei von einer Eingangsseite 111 der ersten Anlage 107 bis zu einer Ausgangsseite 112 der ersten Anlage 107.

Die zweite Vorrichtung 108 besitzt im Wesentlichen den gleichen Aufbau wie die zuvor beschriebene Vorrichtung 50 aus den Figuren 10 bis 19, und die Vorrichtung 108 weist dementsprechend den Drapierrahmen 1 mit den daran beweglich angeordneten motorisch angetriebenen Greifern 2 zum Greifen des Folienelements 20, die Zuführ- und/oder Einlegeeinrichtung 80 sowie die Entnahmeeinrichtung 85 mit der Robotereinrichtung 70 sowie das Trägerteilmagazin 100 auf.

In diesem ersten Anlagenausführungsbeispiel umfasst die Vorrichtung 108 jedoch zwei Heizeinheiten 85 an ihrer Zuführ- und/oder Einlegeeinrichtung 80, wodurch die Taktzeiten an der alternativen Vorrichtung 108 beziehungsweise an der Anlage 107 vorteilhaft reduziert werden können. Beispielsweise können die Taktzeiten hierbei unter 40 Sekunden liegen.

Jedenfalls werden die Folienelemente 20 abwechselnd aus der jeweiligen Heizeinheit 85 in den Drapierrahmen 1 eingelegt.

Nachdem das jeweilige Folienelement 20 auf das Trägerteil 30 aufkaschiert wurde, wird das jeweilige fertig kaschierte Bauteil 37, 38 beziehungsweise 39 (vgl. Figuren 4 bis 9) mit der Robotereinrichtung 70 an die inline nachgeschaltete Stanz- und Umbugstation 114 übergeben und dort für eine Weiterbearbeitung abgelegt.

Bis auf die zwei Heizeinheiten 85 weist die alternative Vorrichtung 108 ansonsten den gleichen Aufbau wie die in den Figuren 10 bis 19 beschriebene Vorrichtung 50 auf, so dass hinsichtlich eines detaillierteren Aufbaus und der Funktionsweise der alternativen Vorrichtung 108 auf die Beschreibung der Vorrichtung 50 verwiesen wird.

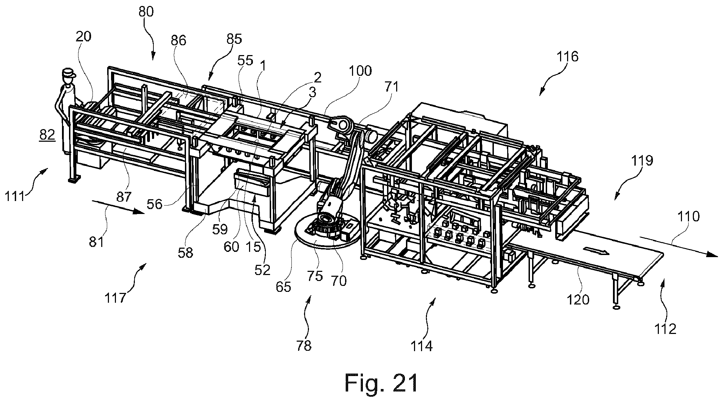

Bei dem in der Figur 21 gezeigten zweiten Anlagenausführungsbeispiel ist eine zweite Anlage 116 zum Fertigen eines Formteils oder kaschierten Bauteils 37, 38 beziehungsweise 39 mit einer Bearbeitungslinie 110 gezeigt.

In dieser Bearbeitungslinie 110 sind eine dritte Vorrichtung 117 zum Formen und/oder Kaschieren eines Folienelements 20 sowie eine diese Vorrichtung 117 nachgeschalteten Stanz- und Umbugstation 114 angeordnet, an welcher sich inline der Bearbeitungslinie 110 zusätzlich noch eine Austragsstation 119 zum Austragen von fertig kaschierten Bauteile 37, 38 beziehungsweise 39 (vgl. Figuren 4 bis 9) mit einem Austragstisch 120 anschließt. Mittels der Austragsstation 119 wird ein höherer Automatisierungsgrad an der zweiten Anlage 116 erzielt.

Auch die dritte Vorrichtung 117 besitzt im Wesentlichen den gleichen Aufbau wie die zuvor beschriebene Vorrichtung 50 aus den Figuren 10 bis 19, und die dritte Vorrichtung 107 weist dementsprechend den Drapierrahmen 1 mit den daran beweglich angeordneten motorisch angetriebenen Greifern 2 zum Greifen des Folienelements 20, die Zuführ- und/oder Einlegeeinrichtung 80 sowie die Entnahmeeinrichtung 85 mit der Robotereinrichtung 70 sowie das Trägerteilmagazin 100 auf.

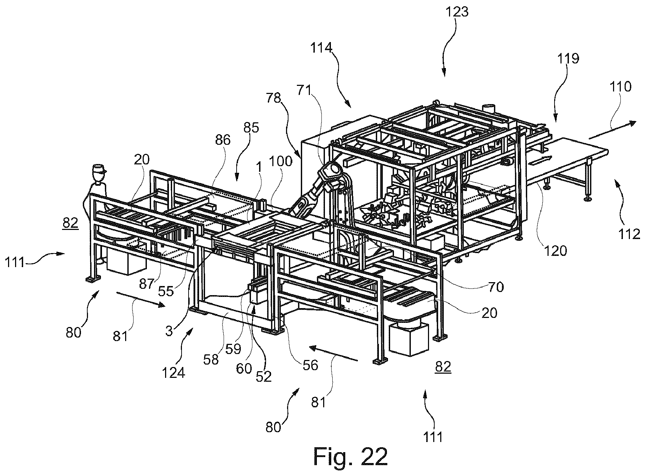

Ein drittes Anlagenausführungsbeispiel zeigt die Figur 22, bei welchem eine dritte Anlage 123 in ihrer Bearbeitungslinie 110 zwei Zuführ- und/oder Einlegeeinrichtungen 80 einer vierten Vorrichtung 124 zum Formen und/oder Kaschieren des Folienelements 20 aufweist. Die vierte Vorrichtung 124 weist dementsprechend auch zwei Heizeinheiten 85 aufweist, so dass auch hier wieder eine vorteilhafte Taktzeitverkürzung erzielt werden kann.

Diese vierte Vorrichtung 124 besitzt im Wesentlichen den gleichen Aufbau wie die zuvor beschriebene Vorrichtung 50 aus den Figuren 10 bis 19. Die vierte Vorrichtung 124 weist insofern den Drapierrahmen 1 mit den daran beweglich angeordneten motorisch angetriebenen Greifern 2 zum Greifen des Folienelements 20, die Zuführ- und/oder Einlegeeinrichtung 80 in zweifacher Form sowie die Entnahmeeinrichtung 85 mit der Robotereinrichtung 70 sowie das Trägerteilmagazin 100 auf.

Der vierten Vorrichtung 124 sind inline dann wieder nachgeschaltet die Stanz- und Umbugstation 114 sowie die Austragsstation 119 zum Austragen von fertig kaschierten Bauteile 37, 38 beziehungsweise 39 (vgl. Figuren 4 bis 9).

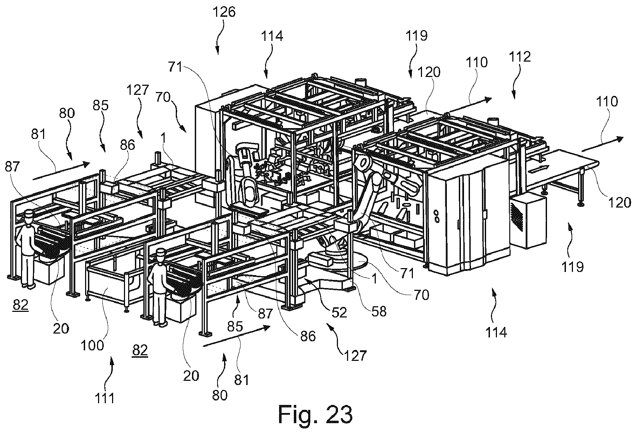

Gemäß der Darstellung nach der Figur 23 ist ein viertes Anlagenausführungsbeispiel hinsichtlich einer Doppelanlage 126 zum Fertigen eines Formteils oder eines kaschierten Bauteils mit zwei Bearbeitungslinien 110, wobei an der Doppelanlage 126 dementsprechend alle Maschinen doppelt vorhanden sind.

So besitzt die Doppelanlage 126 zwei fünfte Vorrichtungen 127, wobei jede fünfte Vorrichtung 127 den Drapierrahmen 1 mit den daran beweglich angeordneten motorisch angetriebenen Greifern 2 zum Greifen des Folienelements 20, die Zuführ- und/oder Einlegeeinrichtung 80 sowie die Entnahmeeinrichtung 85 mit der Robotereinrichtung 70 sowie das Trägerteilmagazin 100 aufweist.

Ferner sind an der Doppelanlage 126 den fünften Vorrichtungen 127 inline der Bearbeitungslinien 110 zwei Stanz- und Umbugstationen 114 und zwei Austragsstationen 119 nachgeschaltet, wodurch die Ausstoßrate mit in der Doppelanlage 126 verdoppelt werden kann.

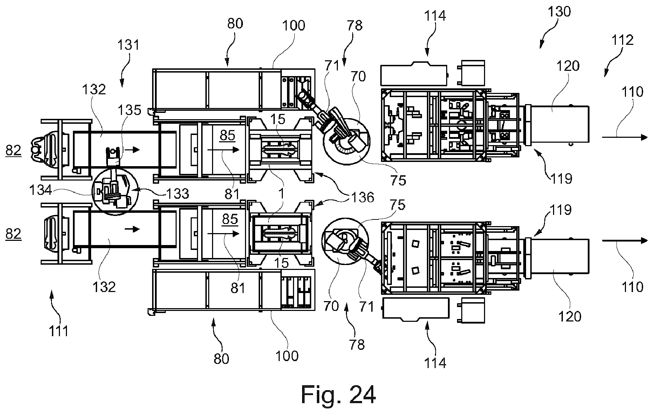

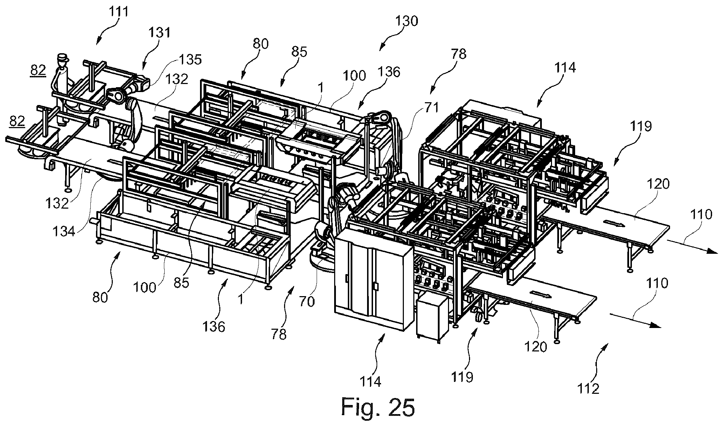

Gemäß den Darstellungen nach den Figuren 24 und 25 ist eine weiteren Doppelanlage 130 zum Fertigen eines Formteils oder eines kaschierten Bauteils 37, 38 oder 39 dargestellt.

Diese weitere Doppelanlage 130 besitzt ebenfalls zwei Bearbeitungslinien 110, weist aber gegenüber der ersten Doppelanlage 126 aus der Figur 23 an der Eingangsseite 111 der weiteren Doppelanlage 130 zusätzlich noch eine Kleberauftragsstation 131 auf.

Dieser Kleberauftragsstation 131 gehören wegen der zwei vorhandenen Bearbeitungslinien 110 entsprechend zwei Kleberauftragsstrecken 132 an, wobei diese zwei Kleberauftragsstrecken 132 durch eine gemeinsame Kleberauftragseinrichtung 133 bedient werden. Hierfür ist die Kleberauftragseinrichtung 133 mit einem Kleberauftragsroboter 134 mit einem entsprechenden Auftragsmanipulator 135 ausgerüstet.

Die Kleberauftragseinrichtung 133 mit ihrem Kleberauftragsroboter 134 ist zwischen den beiden Kleberauftragsstrecken 132 der Kleberauftragsstation 131 angeordnet, so dass beide Kleberauftragsstrecken 132 unproblematisch durch den Kleberauftragsmanipulator 135 erreicht und bedient werden können.

Hinter der Kleberauftragsstation 131 befinden sich gemäß der zweifachen Bearbeitungslinien 110 nachgeschaltet auch noch zwei sechste Vorrichtungen 136 zum Formen und/oder Kaschieren eines Folienelements 20. Die j eweilige sechste Vorrichtung 136 umfasst auch hier wieder die Zuführ- und/oder Einlegeeinrichtung 80 zum Zuführen und/oder Einlegen des Folienelements 20 in den Drapierrahmen 1, wobei jeder sechsten Vorrichtungen 136 seitlich das Trägerteilmagazin 100 zugeordnet ist. Ferner umfassen die sechsten Vorrichtungen 136 jeweils auch wieder die Entnahmeeinrichtung 75 in Gestalt der Robotereinrichtung 70.

Der jeweiligen sechsten Vorrichtung 136 ist wieder die Stanz- und Umbugstation 114 nachgeschaltet.

Ausgangsseitig der weiteren Doppelanlage 130 befindet sich an jeder Bearbeitungslinie wieder die Austragsstation 119.

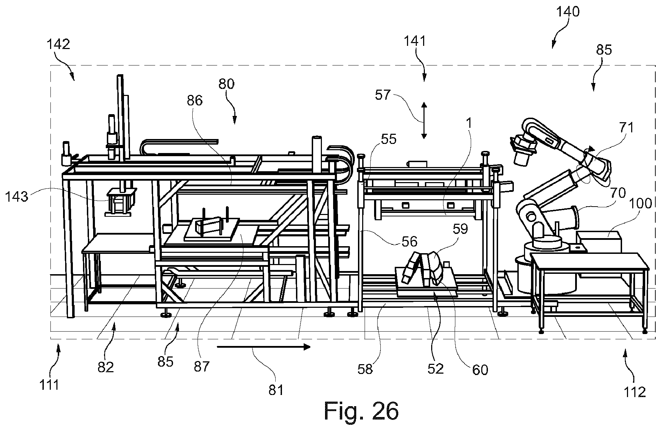

Gemäß der Darstellung nach der Figur 26 ist eine vollautomatisierte Anlage 140 zum Fertigen eines Formteils oder eines kaschierten Bauteils 37, 38 oder 39 mit einer Bearbeitungslinie 110 und einer siebten Vorrichtung 141 zum Formen und/oder Kaschieren eines Formelements 20 gezeigt.

Diese siebte Vorrichtung 141 besitzt wieder im Wesentlichen den gleichen Aufbau wie die zuvor beschriebene Vorrichtung 50 aus den Figuren 10 bis 19.

Die siebte Vorrichtung 141 weist dementsprechend den Drapierrahmen 1 mit den daran beweglich angeordneten motorisch angetriebenen Greifern 2 zum Greifen des Folienelements 20, die Zuführ- und/oder Einlegeeinrichtung 80 sowie die Entnahmeeinrichtung 85 mit der Robotereinrichtung 70 sowie das Trägerteilmagazin 100 auf.

Die vollautomatisierte Anlage 140 weist an ihrer Eingangsseite 111 zusätzlich eine Beschickungsstation 142 zum Beschicken der siebten Vorrichtung 141 zum Formen und/oder Kaschieren des Formelements 20.

Die Beschickungsstation 141 verfügt zum Aufnehmen von Folienelementen 20 und Ablegen dieser Folienelementen 20 auf der Zuführ- und/oder Einlegestrecke 81 über Greifeinrichtung 143.

Mittels dieser Beschickungsstation 141 können Folienelemente 20 weitestgehend ohne Bedienpersonal an die Zuführ- und/oder Einlegestrecke 81 der Zuführ- und/oder Einlegeeinrichtung 80 der siebten Vorrichtung 141 übergeben werden.

Somit kann die vollautomatisierte Anlage 140 mit einem noch höheren Automatisierungsgrad arbeiten.

Es versteht sich, dass eine derartige Beschickungsstation 141 auch an allen vorstehend beschriebenen Vorrichtungen 50, 108, 117, 124, 127 sowie 136 als auch den diesbezüglichen Anlagen 111, 116, 123, 126 sowie 130 vorgeschaltet sein kann, um auch dort entsprechend Bedienpersonal einzusparen.

Jedoch ist diese Beschickungsstation 142 exemplarisch nur hinsichtlich der vollautomatisierten Anlage 140 dargestellt.

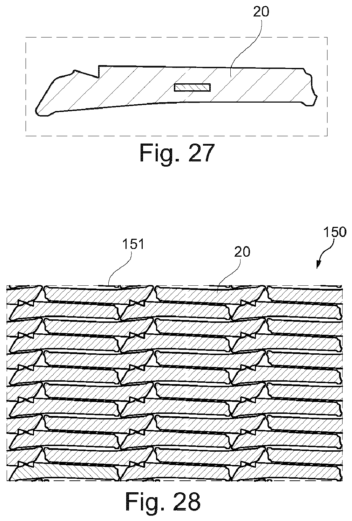

Gemäß der Figur 27 ist schematisch ein vorkonfektioniertes Folienelement 20, wie es bei vorliegender Erfindung zum Einsatz kommen kann, dargestellt, während gemäß der Figur 28 ein optimiertes Schnittmuster 150 mit einer Vielzahl an designierten Folienelementen 20 dargestellt.

Diese designierten Folienelemente 20 können besonders eng zueinander und insofern mit sehr wenig Restfoliengittermaterial 151 dazwischen an dem optimierten Schnittmuster 150 platziert werden, da die hieraus ausgeschnittenen Folienelemente 20 erst durch die erfindungsgemäßen Greifer 2 beziehungsweise den erfindungsgemäßen Drapierrahmen 1 betriebssicher gegriffen werden können.

Dies liegt unter anderem daran, dass die erfindungsgemäßen Greifer 2 aufgrund der hohen mehraxialen Bewegungsfreiheiten mit sieben Freiheitsgrade in dem Drapierraum 15 bewegt werden können.

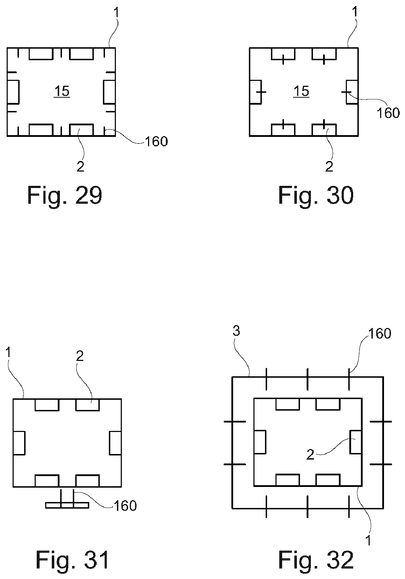

Gemäß den Darstellungen nach den Figuren 29 bis 32 ist die Kaschiervorrichtung jeweils mit einer Vielzahl an Umbugmitteln 160 bzw. Umbugschiebern gezeigt, wobei die Umbugmittel 160 an einem Drapierraum 15 der Vorrichtung 1 vorgesehen sind.

Bei dem in der Figur 29 gezeigten Ausführungsbeispiel befinden sich die Umbugmittel 160 neben den Greifern 2 an dem Drapierrahmen 1 befestigt.

Bei dem in der Figur 30 gezeigten Ausführungsbeispiel befinden sich die Umbugmittel 160 an den Greifern 2 angeordnet.

Bei dem in der Figur 31 gezeigten Ausführungsbeispiel befinden sich die Umbugmittel 160 an einem Gestell (hier nicht gesondert beziffert) der Kaschiervorrichtung angeordnet.

Und bei dem in der Figur 32 gezeigten Ausführungsbeispiel befinden sich die Umbugmittel 160 an dem Rahmenteil 3 der Kaschiervorrichtung,

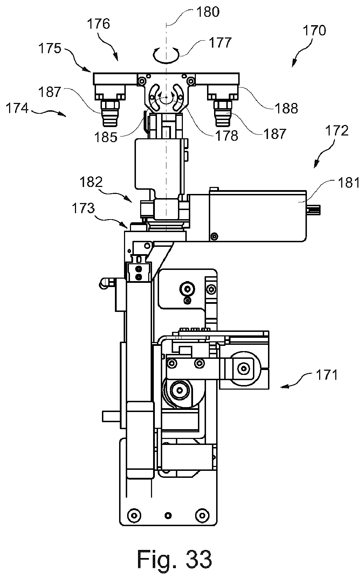

Gemäß der Darstellung nach der Figur 33 ist ein alternativer Greifer 170 gezeigt, welcher im Wesentlichen dem Greifer 2 aus der Figur 2 entspricht.

Der Greifer 170 weist ein Greiferchassis 171 auf, an dessen Vorderseite 172 bzw. Stirnseite 173 ein Greiferkopfteil 174 angeordnet ist, an welchem die eigentlichen Greiferbackenelemente 175 und 176 des Greifers 170 gelagert sind, wobei bei der Aufsicht hier nur das oberen Greiferbackenelement 176 zu sehen ist.

Der Greifer 170 ist mit seinem Greiferkopfteil 174 einem Drapierraum 15 zugewandt.

Das Greiferkopfteil 174 besitzt gegenüber dem Greiferchassis 171 einen Freiheitsgrad 177 sowie einen weiteren Freiheitsgrad 178.

Der Freiheitsgrad 177 ergibt sich durch die Drehachse 180 des Drehantriebs 181, wobei der Drehantrieb 181 ein Schneckengetriebe 182 aufweist. Insofern können die Greiferbackenelemente 175 und 176 an dem Greiferkopfteil 174 um die Drehachse 180 gegenüber dem Greiferchassis 171 motorisch und automatisiert gedreht werden. Die Drehachse 180 steht hierbei senkrecht zu der Stirnseite 173, so dass es sich hierbei um eine Horizontalachse (nicht nochmals beziffert) handelt.

Der weitere Freiheitsgrad 178 ergibt sich um die Vertikalachse 185, um welche die Greiferbackenelemente 175 und 176 manuell geschwenkt werden können.

Gut zu erkennen sich auch noch Kühlmittelanschlüsse 187 an den Rückseiten 188 der Greiferbackenelemente 175 und 176, an welche eine Temperiereinrichtung angeschlossen werden kann, um die Greiferbackenelemente 175 und 176 mit einem Kühlmittel durchströmen lassen zu können.

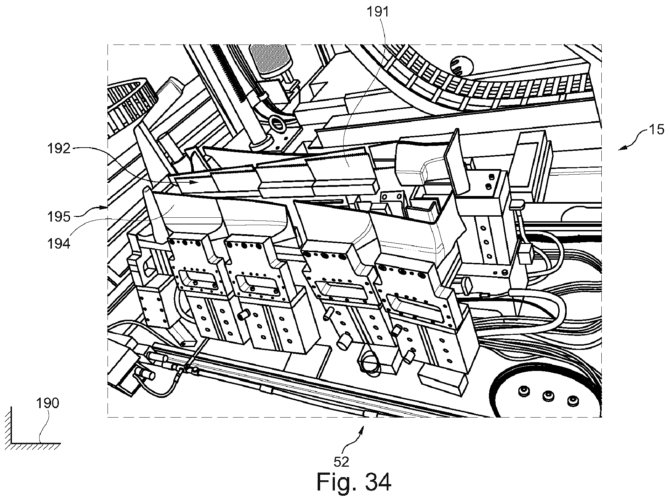

Gemäß der Darstellung nach der Figur 34 ist eine weitere Vorrichtung 190 zum Formen und/oder Kaschieren eines Folienelements 20 auf einem Trägerteil 30, wobei die Vorrichtung 190 eine Vielzahl an hier nicht gezeigten Greifern und 2 bzw. 170 sowie ein hier ebenfalls nicht gezeigte Trägerteilaufnahme 63, welche an einem Manipulator 71 (nicht gezeigt, Oberwerkzeug 53) eines Kaschierwerkzeugs 51 (ebenfalls nicht dargestellt) befestigt ist. Die Vorrichtung 190 weist einen Drapierraum 15 bzw. Kaschierraum 15, in welchem ein Unterwerkzeug 52 angeordnet ist. Das Unterwerkzeug 52 kann in diesem Ausführungsbeispiel ein Formschalenteil 59 (nicht gezeigt) aufweisen. Vorteilhafterweise weist die weitere Vorrichtung 190 bzw. deren Unterwerkzeug 52 sowohl Stanzmessersegmente 191 (hier nur exemplarisch beziffert) einer Stanzeinrichtung 192 als auch Dichtschiebersegmente 194 einer Dichteinrichtung 195 einer nicht weiter gezeigten Druckdifferenzeinrichtung auf.

Die Stanzmessersegmente 191 und die Dichtschiebersegmente 194 sind hierbei nebeneinander angeordnet, wobei alle Stanzmessersegmente 191 und Dichtschiebersegmente 194 einzeln ansteuerbar und verlagerbar sind, wodurch einerseits Stanzkräfte an der weiteren Vorrichtung 190 vorteilhaft reduziert werden können (Stanzmessersegmente 191) und andererseits eine Dichteinrichtung 195 differenzierter und näher an das Trägerteil 30 positioniert werden können, wodurch insgesamt eine nicht zu vernachlässigende Folienmaterialmenge eingespart werden kann.

### Liste der verwendeten Bezugszeichen

- 1: Drapierrahmen
- 2: motorisch angetriebene Greifer
- 3: Rahmenteil
- 4: linker Seitenbereich
- 5: rechter Seitenbereich
- 6: vorderer Seitenbereich
- 7: hinterer Seitenbereich
- 8: Gehäuse
- 9: Unterseite
- 10: Oberseite
- 15: Drapierraum bzw. Kaschierraum
- 16: Längstraversen
- 17: Quertraversen
- 20: Folienelement
- 22: Greiferchassis
- 24: Vorderseite
- 25: Greiferkopfteil
- 26: unteres Greiferbackenelement
- 27: oberes Greiferbackenelement
- 28: Temperiermittel
- 29: Zugkräftemessmittel
- 30: Trägerteil
- 31: Kontur
- 32: Annäherungskurve
- 33: sichtbare Oberfläche
- 35: Raster
- 37: erstes Automotive-Bauteil bzw. kaschiertes Bauteil
- 38: zweites Automotive-Bauteil bzw. kaschiertes Bauteil
- 39: drittes Automotive-Bauteil bzw. kaschiertes Bauteil
- 50: Vorrichtung
- 51: Kaschierwerkzeug
- 52: Unterwerkzeug
- 53: Oberwerkzeug
- 55: Verfahrmechanismus
- 56: Gestell
- 57: Vertikalverlagerungsachse
- 58: Bodenteil
- 59: Formschalenteil bzw. Formschalenteile
- 60: Sockel
- 63: Trägerteilaufnahme bzw. Trägerteilaufnahmen
- 65: Einbringeinrichtung
- 70: Robotereinrichtung
- 71: Manipulator
- 75: Entnahmeeinrichtung
- 78: Transferstation
- 80: Zuführ- und/oder Einlegeeinrichtung
- 81: Zuführ- und/oder Einlegestrecke
- 82: Beschickungsposition
- 85: Heizeinheit
- 86: obere Heizeinrichtung
- 87: untere Heizeinrichtung
- 89: Zuführposition
- 90: Startposition
- 100: Trägerteilmagazin
- 103: Einlegeposition
- 104: Beschneidestation
- 105: Bereitstellungsposition
- 107: erste Anlage
- 108: zweite Vorrichtung
- 110: Bearbeitungslinie
- 111: Eingangsseite
- 112: Ausgangsseite
- 114: Stanz- und Umbugstation
- 116: zweite Anlage
- 117: dritte Vorrichtung
- 119: Austragsstation
- 120: Austragstisch
- 123: dritte Anlage
- 124: vierte Vorrichtung
- 126: erste Doppelanlage
- 127: fünfte Vorrichtungen
- 130: weitere Doppelanlage
- 131: Kleberauftragstation
- 132: Kleberauftragsstrecken
- 133: Kleberauftragseinrichtung
- 134: Kleberauftragsroboter
- 135: Kleberauftragsmanipulator
- 136: sechste Vorrichtungen
- 140: vollautomatisierte Anlage
- 141: siebte Vorrichtung
- 142: Beschickungsstation
- 143: Greifeinrichtung
- 150: Schnittmuster
- 151: Restfoliengitter
- 160: Umbugmittel bzw. Umbugschieber
- 170: alternativer Greifer
- 171: Greiferchassis
- 172: Vorderseite
- 173: Stirnseite
- 174: Greiferkopfteil
- 175: unteres Greiferbackenelement
- 176: oberes Greiferbackenelement
- 177: Freiheitsgrad
- 178: weiterer Freiheitsgrad
- 180: Drehachse bzw. Horizontalachse
- 181: Drehantrieb
- 182: Schneckengetriebe
- 185: Vertikalachse
- 187: Kühlmittelanschlüsse bzw. Anschlussschnittstellen
- 188: Rückseiten
- 190: weitere Vorrichtung
- 191: Stanzmessersegmente
- 192: Stanzeinrichtung
- 194: Dichtschiebersegmente
- 195: Dichteinrichtung

## Patentansprüche

1. Vorrichtung (50; 108; 117; 124; 127; 136; 141; 190) zum Kaschieren eines Folienelements (20) auf einem Trägerteil (30), mit Greifern (2; 170) zum Greifen des Folienelements (20), mit einer Trägerteilaufnahme zum Haltern des Trägerteils (30) gegenüber dem Folienelement (20) und mit einem Kaschierraum (15), in welchem das Folienelement (20) auf das Trägerteil (30) aufkaschiert wird, **dadurch gekennzeichnet, dass** die Vorrichtung (50; 108; 117; 124; 127; 136; 141; 190) eine Einbringeinrichtung (65) zum Einbringen der Trägerteilaufnahme und/oder des Trägerteils (30) in den Kaschierraum (15) aufweist, wobei die Einbringeinrichtung (65) wenigstens zwei Freiheitsgrade im Raum, insbesondere in dem Kaschierraum (15), aufweist, wobei die Vorrichtung ein Presswerkzeug mit einer ersten Werkzeughälfte und mit einer zweiten Werkzeughälfte aufweist, und wobei die erste Werkzeughälfte die Einbringeinrichtung (65) umfasst.

2. Vorrichtung (50; 108; 117; 124; 127; 136; 141; 190) nach Anspruch 1, **dadurch gekennzeichnet, dass** die Einbringeinrichtung (65) einen mehraxial beweglichen Manipulator (71) aufweist.

3. Vorrichtung (50; 108; 117; 124; 127; 136; 141; 190) nach Anspruch 1 oder 2, **dadurch gekennzeichnet, dass** die Einbringeinrichtung (65) eine zusätzliche Stützeinrichtung zum Aufnehmen von Arbeitskräften, insbesondere von Presskräften, umfasst.

## Claims

1. Apparatus (50; 108; 117; 124; 127; 136; 141; 190) for laminating a film element (20) on a carrier part (30), having grippers (2; 170) for gripping the film element (20), having a carrier-part mount for holding the carrier part (30) in relation to the film element (20), and having a laminating chamber (15), in which the film element (20) is laminated onto the carrier part (30), **characterized in that** the apparatus (50; 108; 117; 124; 127; 136; 141; 190) has an insertion device (65) for inserting the carrier-part mount and/or the carrier part (30) into the laminating chamber (15), wherein the insertion device (65) has at least two degrees of freedom in space, in particular in the laminating chamber (15), wherein the apparatus has a pressing tool with a first tool half and with a second tool half, and wherein the first tool half comprises the insertion device (65).

2. Apparatus (50; 108; 117; 124; 127; 136; 141; 190) according to Claim 1, **characterized in that** the insertion device (65) has a multiaxially movable manipulator (71).

3. Apparatus (50; 108; 117; 124; 127; 136; 141; 190) according to Claim 1 or 2, **characterized in that** the insertion device (65) comprises an additional supporting device for absorbing operating forces, in particular pressing forces.

## Revendications

1. Dispositif (50 ; 108 ; 117 ; 124 ; 127 ; 136 ; 141 ; 190) pour appliquer avec laminage un élément en feuille (20) sur une partie de support (30), comprenant des pinces (2 ; 170) pour saisir l'élément en feuille (20), comprenant un logement de partie de support pour maintenir la partie de support (30) par rapport à l'élément en feuille (20) et un espace de laminage (15) dans lequel l'élément en feuille (20) est appliqué par laminage sur la partie de support (30), **caractérisé en ce que** le dispositif (50 ; 108 ; 117 ; 124 ; 127 ; 136 ; 141 ; 190) comprend un dispositif d'introduction (65) pour introduire le logement de partie de support et/ou la partie de support (30) dans l'espace de laminage (15), le dispositif d'introduction (65) présentant au moins deux degrés de liberté dans l'espace, en particulier dans l'espace de laminage (15), le dispositif comprenant un outil de pressage qui comprend une première moitié d'outil et une deuxième moitié d'outil, et la première moitié d'outil comprenant le dispositif d'introduction (65).

2. Dispositif (50 ; 108 ; 117 ; 124 ; 127 ; 136 ; 141 ; 190) selon la revendication 1, **caractérisé en ce que** le dispositif d'introduction (65) comprend un manipulateur (71) mobile sur plusieurs axes.

3. Dispositif (50 ; 108 ; 117 ; 124 ; 127 ; 136 ; 141 ; 190) selon la revendication 1 ou la revendication 2, **caractérisé en ce que** le dispositif d'introduction (65) comprend un dispositif de support supplémentaire pour absorber les forces de travail, en particulier les forces de pression.
